# EUROPEAN PATENT APPLICATION

(11) **EP 4 408 050 A1**
(43) Date of publication of application: **31.07.2024**
(21) Application number: 22874997.4
(22) Date of filing: 28.09.2022
(51) Int. Cl.: H04W 12/03, H04W 12/10, H04W 12/041, H04W 12/106, H04W 12/108

(54) **COMMUNICATION METHOD AND APPARATUS**

(30) Priority: 29.09.2021 CN 202111155030
(71) Applicant: Huawei Technologies Co., Ltd., Shenzhen, Guangdong 518129 (CN)
(72) Inventor: HU, Li, Shenzhen, Guangdong 518129 (CN); LI, He, Shenzhen, Guangdong 518129 (CN); WU, Rong, Shenzhen, Guangdong 518129 (CN)
(74) Representative: Pfenning, Meinig & Partner mbB
(86) International application number: PCT/CN2022/122165
(87) International publication number: WO 2023/051614

(57) **Abstract**

This application provides a communication method and apparatus, to implement on-demand user plane integrity protection in a 4th generation (4th generation, 4G) network. The method includes: When a first condition is met, an access network device of a first network standard obtains user plane integrity protection indication information and an integrity protection algorithm identifier of a second network standard, sends a first message to a terminal device, and activates user plane integrity protection for a first data radio bearer (data radio bearer, DRB) based on a first key and the integrity protection algorithm of the second network standard. The first condition includes: determining to establish the first DRB between the access network device of the first network standard and the terminal device, and determining to enable the user plane integrity protection for the first DRB. The user plane integrity protection indication information indicates to enable the user plane integrity protection for the first DRB. The first message includes the user plane integrity protection indication information and the integrity protection algorithm identifier of the second network standard.

## Description

This application claims priority to Chinese Patent Application No. 202111155030.6, filed with the China National Intellectual Property Administration on September 29, 2021 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

An on-demand user plane security protection mechanism is a security mechanism in a 5th generation (5th generation, 5G) network, and the on-demand user plane security protection mechanism includes user plane encryption protection and user plane integrity protection. For example, in the on-demand user plane security protection mechanism, an access network device determines, according to a user plane security policy, whether to enable user plane encryption protection and/or user plane integrity protection between the access network device and a terminal device. In this way, the on-demand user plane security protection mechanism in the 5G network can provide more flexible user plane security protection for the terminal device.

In an existing 4th generation (4th generation, 4G) network, user plane security between the access network device and the terminal device is fixed. To be specific, the user plane encryption protection is always enabled, and the user plane integrity protection is always disabled. That is, in the existing 4G network, on-demand enabling of the user plane integrity protection is not supported, and the user plane security protection is inflexible. Therefore, how to implement the on-demand user plane integrity protection in the 4G network becomes an urgent problem to be resolved.

### SUMMARY

Embodiments of this application provide a communication method and apparatus, to implement on-demand user plane integrity protection in a 4G network.

To achieve the foregoing objective, the following technical solutions are used in this application.

According to a first aspect, a communication method is provided. The communication method includes: When a first condition is met, an access network device of a first network standard obtains user plane integrity protection indication information and an integrity protection algorithm identifier of a second network standard, sends a first message to a terminal device, and activates user plane integrity protection for a first data radio bearer (data radio bearer, DRB) based on a first key and the integrity protection algorithm of the second network standard. The first condition includes: determining to establish the first DRB between the access network device of the first network standard and the terminal device, and determining to enable the user plane integrity protection for the first DRB. The user plane integrity protection indication information indicates to enable the user plane integrity protection for the first DRB. The first message includes the user plane integrity protection indication information and the integrity protection algorithm identifier of the second network standard.

Based on the communication method in the first aspect, when determining to establish the first DRB and determining to enable the user plane integrity protection for the first DRB, the access network device of the first network standard obtains the user plane integrity protection indication information indicating to enable the user plane integrity protection and the integrity protection algorithm identifier of the second network standard, and sends the user plane integrity protection indication information and the integrity protection algorithm identifier of the second network standard to the terminal device. In this way, both the access network device of the first network standard and the terminal device may activate the user plane integrity protection for the first DRB based on the first key and the integrity protection algorithm of the second network standard, so that an on-demand user plane integrity protection mode of the second network standard is applied to the user plane integrity protection between the terminal device and the access network device of the first network standard, and changes to the terminal device can be reduced.

In a possible design manner, the first message may further include first indication information, and the first indication information may indicate to determine the first key by using a master key. Optionally, the master key may be a key KeNB of the access network device of the first network standard. The first key may be a user plane integrity protection key, and the first key may be used to perform integrity protection on user plane data between the terminal device and the access network device.

In a possible design manner, the first key may be determined based on the master key, the integrity protection algorithm identifier of the second network standard, and a first algorithm type distinguisher. Optionally, a value of the first algorithm type distinguisher may be 0x07. For example, the first algorithm type distinguisher may be N-UP-int-alg. In this way, the user plane integrity protection for the first DRB may be activated based on the first key and the integrity protection algorithm of the second network standard, so that an on-demand user plane integrity protection mode of the second network standard is applied to the user plane integrity protection between the terminal device and the access network device of the first network standard.

In a possible design manner, the integrity protection algorithm identifier of the second network standard may be determined based on a security capability that is of the second network standard and that is of the terminal device. Optionally, the security capability of the second network standard may be a new radio (new radio, NR) security capability, the NR security capability includes at least one integrity protection algorithm identifier, and the access network device of the first network standard may select one integrity protection algorithm identifier from the at least one integrity protection algorithm identifier.

In a possible design manner, the communication method provided in the first aspect may further include: The access network device of the first network standard receives a second message from a core network element of the first network standard. The second message may include the security capability that is of the second network standard and that is of the terminal device. In other words, the security capability of the second network standard may be received from the core network element of the first network standard.

In a possible design manner, the integrity protection algorithm identifier of the second network standard may be determined based on a security capability of the first network standard. Optionally, the security capability of the second network standard may be determined based on the security capability of the first network standard, and the integrity protection algorithm identifier of the second network standard may be determined based on the security capability of the second network standard.

In a possible design manner, the communication method provided in the first aspect may further include: When the terminal device supports the user plane integrity protection, the access network device of the first network standard determines the integrity protection algorithm identifier of the second network standard based on the security capability of the first network standard. In this way, a power consumption waste can be avoided.

In a possible design manner, the security capability of the first network standard may include an integrity protection algorithm identifier of the first network standard, and the integrity protection algorithm identifier of the second network standard may be obtained by mapping the integrity protection algorithm identifier of the first network standard. In this way, the integrity protection algorithm identifier of the second network standard may be obtained through mapping.

In a possible design manner, the security capability of the first network standard may be received by the access network device of the first network standard from a core network element of the first network standard. In this way, the security capability of the first network standard may be obtained, and the integrity protection algorithm identifier of the second network standard may be further obtained.

In a possible design manner, that an access network device of a first network standard activates the user plane integrity protection for the first DRB based on a first key and the integrity protection algorithm of the second network standard may include: The access network device of the first network standard configures the first key and the integrity protection algorithm of the second network standard for a packet data convergence protocol (packet data convergence protocol, PDCP) entity that is of the second network standard and that corresponds to the first DRB. In this way, the user plane integrity protection may be activated by using the PDCP of the second network standard.

In a possible design manner, the first condition may further include: The terminal device supports the user plane integrity protection. For the support for the user plane integrity protection, refer to the descriptions in the following embodiments. After it is determined that the terminal device supports the user plane integrity protection, a procedure of flexibly enabling the user plane integrity protection (for example, obtaining the user plane integrity protection indication information and the integrity protection algorithm identifier of the second network standard) is performed, so that power consumption can be reduced.

In a possible design manner, the communication method provided in the first aspect may further include: The access network device of the first network standard receives user plane indication information from the terminal device or the core network element of the first network standard. The user plane indication information may indicate whether the terminal device supports the user plane integrity protection, and the first condition may be determined based on the user plane indication information. In this way, the access network device of the first network standard may determine, based on the user plane indication information, whether the terminal device supports the user plane integrity protection.

In a possible design manner, the user plane integrity protection indication information, the integrity protection algorithm identifier of the second network standard, and the first indication information may be encapsulated in a radio bearer configuration (Radiobearerconfig) information element of the first message. In this way, changes to related standards for the access network device of the first network standard and the terminal device can be reduced.

In a possible design manner, the first network standard may include 4th generation 4G, long term evolution (long term evolution, LTE), or evolved packet system (evolved packet system, EPS).

In a possible design manner, the second network standard may include 5th generation 5G, new radio NR, or 5th generation system (5th generation system, 5GS).

It should be noted that the first network standard and the second network standard are limited in this application, provided that the first network standard and the second network standard are different network standards.

According to a second aspect, a communication method is provided. The communication method includes: A terminal device receives a first message, and when the first message is from an access network device of a first network standard, and user plane integrity protection indication information indicates to enable user plane integrity protection for a first DRB, the terminal device activates the user plane integrity protection for the first DRB based on a first key and an integrity protection algorithm of a second network standard. The first message includes the user plane integrity protection indication information and an integrity protection algorithm identifier of the second network standard, and the user plane integrity protection indication information indicates to enable the user plane integrity protection for the first data radio bearer DRB between the access network device of the first network standard and the terminal device.

In a possible design manner, the first message may further include first indication information, and the first indication information may indicate to determine the first key by using a master key. The communication method provided in the second aspect may further include: The terminal device determines the first key based on the first indication information and by using the master key.

In a possible design manner, the first key may be determined based on the master key, the integrity protection algorithm identifier of the second network standard, and a first algorithm type distinguisher.

In a possible design manner, a value of the first algorithm type distinguisher may be 0x07. For example, the first algorithm type distinguisher may be N-UP-int-alg.

In a possible design manner, the communication method provided in the second aspect may further include: When the terminal device supports the user plane integrity protection, the terminal device sends a third message to a core network element of the first network standard. The third message may include a security capability of the second network standard.

In a possible design manner, that the terminal device activates the user plane integrity protection for the first DRB based on a first key and an integrity protection algorithm of a second network standard may include: The terminal device may configure the first key and the integrity protection algorithm of the second network standard for a packet data convergence protocol PDCP entity that is of the second network standard and that corresponds to the first DRB.

In a possible design manner, the communication method provided in the second aspect may further include: The terminal device determines, based on a public land mobile network identifier (public land mobile network identifier, PLMN ID), whether the first message is from the access network device of the first network standard, where the PLMN ID is from the access network device that sends the first message. For example, if the PLMN ID does not include 5G, the access network device that sends the first message is the access network device of the first network standard.

In a possible design manner, the communication method provided in the second aspect may further include: The terminal device sends user plane indication information to the access network device of the first network standard or the core network element of the first network standard. The user plane indication information may indicate whether the terminal device supports the user plane integrity protection.

In a possible design manner, the user plane integrity protection indication information, the integrity protection algorithm identifier of the second network standard, and the first indication information may be encapsulated in a radio bearer configuration Radiobearerconfig information element of the first message.

In a possible design manner, the first network standard may include 4th generation 4G, long term evolution LTE, or evolved packet system EPS.

In a possible design manner, the second network standard may include 5th generation 5G, new radio NR, or 5th generation system 5GS.

In addition, for technical effects of the communication method according to the second aspect, refer to the technical effects of the communication method in any one of the possible implementations of the first aspect. Details are not described herein again.

According to a third aspect, a communication method is provided. The communication method includes: When a first condition is met, an access network device of a first network standard obtains user plane integrity protection indication information and an integrity protection algorithm identifier of the first network standard, sends a fourth message to a terminal device, and activates user plane integrity protection for a first DRB based on a first key and an integrity protection algorithm of the first network standard. The fourth message includes the user plane integrity protection indication information. The first condition includes: determining to establish a first data radio bearer DRB between the access network device of the first network standard and the terminal device, and determining to enable the user plane integrity protection for the first DRB. The user plane integrity protection indication information indicates to enable the user plane integrity protection for the first DRB.

Based on the communication method according to the third aspect, when determining to establish the first DRB and determining to enable the user plane integrity protection for the first DRB, the access network device of the first network standard obtains the user plane integrity protection indication information indicating to enable the user plane integrity protection and the integrity protection algorithm identifier of the first network standard, and indicates the terminal device to activate the integrity protection by using the integrity protection algorithm of the first network standard. In this way, both the access network device of the first network standard and the terminal device may activate the user plane integrity protection for the first DRB based on the first key and the integrity protection algorithm of the first network standard, so that an on-demand user plane integrity protection mode of the second network standard is applied to the user plane integrity protection between the terminal device and the access network device of the first network standard, and the user plane integrity protection is activated by using the integrity protection algorithm of the first network standard, thereby implementing independent evolution of the user plane integrity protection of different network standards.

In a possible design manner, the fourth message may further include first indication information and/or second indication information. The first indication information may indicate the terminal device to determine the first key by using the master key, and the second indication information may indicate to activate the user plane integrity protection for the first DRB based on the integrity protection algorithm identifier of the first network standard. Optionally, the second indication information may indicate to activate the user plane integrity protection based on the currently used integrity protection algorithm of the first network standard, or the second indication information includes the integrity protection algorithm identifier of the first network standard. In this way, the second indication information may indicate to enable the user plane integrity protection by using the used integrity protection algorithm.

Optionally, the master key may be a key KeNB of the access network device of the first network standard. The first key may be a user plane integrity protection key, and the first key may be used to perform integrity protection on user plane data between the terminal device and the access network device.

In a possible design manner, the first key may be determined based on the master key, the integrity protection algorithm identifier of the first network standard, and a second algorithm type distinguisher. In this way, the user plane integrity protection for the first DRB may be activated based on the first key and the integrity protection algorithm of the first network standard.

In a possible design manner, the first key is determined based on the master key, an integrity protection algorithm identifier of the second network standard, and a first algorithm type distinguisher, and the integrity protection algorithm identifier of the second network standard is determined based on the integrity protection algorithm identifier of the first network standard. In this way, the user plane integrity protection for the first DRB may be activated based on the first key and the integrity protection algorithm of the second network standard, so that an on-demand user plane integrity protection mode of the second network standard is applied to the user plane integrity protection between the terminal device and the access network device of the first network standard.

In a possible design manner, a value of the first algorithm type distinguisher may be 0x07. For example, the first algorithm type distinguisher may be N-UP-int-alg.

In a possible design manner, that an access network device of a first network standard activates user plane integrity protection for a first DRB based on a first key and an integrity protection algorithm of the first network standard may include: The access network device of the first network standard activates the user plane integrity protection for the first DRB based on the second indication information and by using the first key and the integrity protection algorithm of the first network standard. In this way, the access network device of the first network standard may implement on-demand user plane integrity protection based on the indication of the second indication information and by using the integrity protection algorithm of the first network standard.

In a possible design manner, that an access network device of a first network standard activates user plane integrity protection for a first DRB based on a first key and an integrity protection algorithm of the first network standard may include: The access network device of the first network standard configures the first key and the integrity protection algorithm of the first network standard for a packet data convergence protocol PDCP entity that is of the second network standard and that corresponds to the first DRB. In this way, the user plane integrity protection may be activated by using the PDCP of the second network standard.

In a possible design manner, the first condition may further include: The terminal device supports the user plane integrity protection. For the support for the user plane integrity protection, refer to the descriptions in the following embodiments. After it is determined that the terminal device supports the user plane integrity protection, a procedure of flexibly enabling the user plane integrity protection (for example, obtaining the user plane integrity protection indication information and the integrity protection algorithm identifier of the first network standard) is performed, so that power consumption can be reduced.

In a possible design manner, the communication method provided in the third aspect may further include: The access network device of the first network standard receives user plane indication information from the terminal device or a core network element of the first network standard. The user plane indication information may indicate whether the terminal device supports the user plane integrity protection, and the first condition may be determined based on the user plane indication information. In this way, the access network device of the first network standard may determine, based on the user plane indication information, whether the terminal device supports the user plane integrity protection.

In a possible design manner, the user plane integrity protection indication information, the first indication information, and the second indication information may be encapsulated in a radio bearer configuration Radiobearerconfig information element of the fourth message. In this way, changes to related standards for the access network device of the first network standard and the terminal device can be reduced.

In a possible design manner, the user plane integrity protection indication information and the first indication information may be encapsulated in a radio bearer configuration Radiobearerconfig information element of the fourth message.

In a possible design manner, the first network standard may include 4th generation 4G, long term evolution LTE, or evolved packet system EPS.

In a possible design manner, the second network standard may include 5th generation 5G, new radio NR, or 5th generation system 5GS.

It should be noted that the first network standard and the second network standard are limited in this application, provided that the first network standard and the second network standard are different network standards.

According to a fourth aspect, a communication method is provided. The communication method includes: A terminal device receives a fourth message, and when the fourth message is from an access network device of a first network standard, and user plane integrity protection indication information indicates to enable user plane integrity protection for a first DRB, the terminal device activates the user plane integrity protection for the first DRB based on a first key and an integrity protection algorithm of the first network standard. The fourth message includes the user plane integrity protection indication information, and the user plane integrity protection indication information indicates to enable the user plane integrity protection for the first data radio bearer DRB.

In a possible design manner, the fourth message may further include first indication information, and the first indication information may indicate to determine the first key by using a master key. The communication method provided in the fourth aspect may further include: The terminal device determines the first key based on the first indication information and by using the master key.

In a possible design manner, the first key may be determined based on the master key, an integrity protection algorithm identifier of the first network standard, and a second algorithm type distinguisher.

In a possible design manner, the first key may be determined based on the master key, an integrity protection algorithm identifier of a second network standard, and a first algorithm type distinguisher, and the integrity protection algorithm identifier of the second network standard is determined based on the integrity protection algorithm identifier of the first network standard.

In a possible design manner, a value of the first algorithm type distinguisher may be 0x07. For example, the first algorithm type distinguisher may be N-UP-int-alg.

In a possible design manner, the communication method provided in the fourth aspect may further include: The terminal device obtains the integrity protection algorithm of the first network standard from an access stratum (access stratum, AS) security context based on the user plane integrity protection indication information.

In a possible design manner, the fourth message may further include second indication information, and the second indication information indicates to activate the user plane integrity protection for the first DRB based on the currently used integrity protection algorithm identifier of the first network standard. The communication method provided in the fourth aspect may further include: The terminal device obtains the integrity protection algorithm of the first network standard from the AS security context based on the second indication information.

In a possible design manner, the fourth message further includes second indication information, and the second indication information includes the integrity protection algorithm identifier of the first network standard. The communication method provided in the fourth aspect may further include: The terminal device obtains the integrity protection algorithm of the first network standard based on the integrity protection algorithm identifier of the first network standard.

In a possible design manner, that the terminal device activates the user plane integrity protection for the first DRB based on a first key and an integrity protection algorithm of the first network standard may include: The terminal device configures the first key and the integrity protection algorithm of the first network standard for a packet data convergence protocol PDCP entity that is of the second network standard and that corresponds to the first DRB.

In a possible design manner, the communication method provided in the fourth aspect may further include: The terminal device sends user plane indication information to the access network device of the first network standard or a core network element of the first network standard. The user plane indication information may indicate whether the terminal device supports the user plane integrity protection.

In a possible design manner, the communication method provided in the fourth aspect may further include: The terminal device determines, based on a public land mobile network identifier PLMN ID, whether the fourth message is from the access network device of the first network standard, where the PLMN ID is from the access network device that sends the fourth message.

In a possible design manner, the user plane integrity protection indication information, the first indication information, and the second indication information may be encapsulated in a radio bearer configuration Radiobearerconfig information element of the fourth message.

In a possible design manner, the user plane integrity protection indication information and the first indication information may be encapsulated in a radio bearer configuration Radiobearerconfig information element of the fourth message.

In a possible design manner, the first network standard may include 4th generation 4G, long term evolution LTE, or evolved packet system EPS.

In a possible design manner, the second network standard may include 5th generation 5G, new radio NR, or 5th generation system 5GS.

In addition, for technical effects of the communication method according to the fourth aspect, refer to the technical effects of the communication method in any one of the possible implementations of the third aspect. Details are not described herein again.

According to a fifth aspect, a communication apparatus is provided. The communication apparatus includes a processing module and a transceiver module. When a first condition is met, the processing module is configured to obtain user plane integrity protection indication information and an integrity protection algorithm identifier of a second network standard. The transceiver module is configured to send a first message to a terminal device. The processing module is further configured to activate user plane integrity protection for a first DRB based on a first key and the integrity protection algorithm of the second network standard. The first condition includes: determining to establish the first DRB between the communication apparatus and the terminal device, and determining to enable the user plane integrity protection for the first DRB. The user plane integrity protection indication information indicates to enable the user plane integrity protection for the first DRB. The first message includes the user plane integrity protection indication information and the integrity protection algorithm identifier of the second network standard.

In a possible design manner, the first message may further include first indication information, and the first indication information may indicate to determine the first key by using a master key.

In a possible design manner, the first key may be determined based on the master key, the integrity protection algorithm identifier of the second network standard, and a first algorithm type distinguisher.

In a possible design manner, a value of the first algorithm type distinguisher may be 0x07. For example, the first algorithm type distinguisher may be N-UP-int-alg. In a possible design manner, the integrity protection algorithm identifier of the second network standard may be determined based on a security capability that is of the second network standard and that is of the terminal device.

In a possible design manner, the transceiver module is further configured to receive a second message from a core network element of a first network standard. The second message may include the security capability that is of the second network standard and that is of the terminal device.

In a possible design manner, the integrity protection algorithm identifier of the second network standard may be determined based on a security capability of the first network standard.

In a possible design manner, when the terminal device supports the user plane integrity protection, the processing module is further configured to determine the integrity protection algorithm identifier of the second network standard based on the security capability of the first network standard.

In a possible design manner, the security capability of the first network standard may include an integrity protection algorithm identifier of the first network standard, and the integrity protection algorithm identifier of the second network standard may be obtained by mapping the integrity protection algorithm identifier of the first network standard.

In a possible design manner, the security capability of the first network standard may be received by the communication apparatus from the core network element of the first network standard.

In a possible design manner, the processing module is further configured to configure the first key and the integrity protection algorithm of the second network standard for a PDCP entity that is of the second network standard and that corresponds to the first DRB.

In a possible design manner, the first condition may further include: The terminal device supports the user plane integrity protection.

In a possible design manner, the transceiver module is further configured to receive user plane indication information from the terminal device or the core network element of the first network standard, where the user plane indication information may indicate whether the terminal device supports the user plane integrity protection, and the first condition is determined based on the user plane indication information.

In a possible design manner, the user plane integrity protection indication information, the integrity protection algorithm identifier of the second network standard, and the first indication information may be encapsulated in a radio bearer configuration Radiobearerconfig information element of the first message.

In a possible design manner, the first network standard may include 4th generation 4G, long term evolution LTE, or evolved packet system EPS.

In a possible design manner, the second network standard may include 5th generation 5G, new radio NR, or 5th generation system 5GS.

It should be noted that the transceiver module according to the fifth aspect may include a receiving module and a sending module. The receiving module is configured to receive data and/or signaling from the terminal device and/or the core network element of the first network standard. The sending module is configured to send data and/or signaling to the terminal device and/or the core network element of the first network standard. A specific implementation of the transceiver module is not specifically limited in this application.

Optionally, the communication apparatus according to the fifth aspect may further include a storage module, and the storage module stores a program or instructions. When the processing module executes the program or the instructions, the communication apparatus according to the fifth aspect is enabled to perform the method according to the first aspect.

It should be noted that the communication apparatus according to the fifth aspect may be the access network device of the first network standard, or may be a chip (system) or another component or assembly that may be disposed in the access network device of the first network standard. This is not limited in this application.

In addition, for technical effects of the communication apparatus according to the fifth aspect, refer to the technical effects of the communication method in any one of the possible implementations of the first aspect. Details are not described herein again.

According to a sixth aspect, a communication apparatus is provided. The communication apparatus includes a processing module and a transceiver module. The transceiver module is configured to receive a first message. When the first message is from an access network device of a first network standard, and user plane integrity protection indication information indicates to enable user plane integrity protection for a first DRB, the processing module is configured to activate the user plane integrity protection for the first DRB based on a first key and an integrity protection algorithm of a second network standard. The first message includes the user plane integrity protection indication information and an integrity protection algorithm identifier of the second network standard, and the user plane integrity protection indication information indicates to enable the user plane integrity protection for the first data radio bearer DRB between the access network device of the first network standard and the communication apparatus.

In a possible design manner, the first message may further include first indication information, and the first indication information may indicate to determine the first key by using a master key. The processing module is further configured to determine the first key based on the first indication information and by using the master key.

In a possible design manner, the first key may be determined based on the master key, the integrity protection algorithm identifier of the second network standard, and a first algorithm type distinguisher.

In a possible design manner, a value of the first algorithm type distinguisher may be 0x07. For example, the first algorithm type distinguisher may be N-UP-int-alg.

In a possible design manner, when the communication apparatus supports the user plane integrity protection, the transceiver module is further configured to send a third message to a core network element of the first network standard. The third message may include a security capability of the second network standard.

In a possible design manner, when the first message is from the access network device of the first network standard, and the user plane integrity protection indication information indicates to enable the user plane integrity protection for the first DRB, the processing module is further configured to configure the first key and the integrity protection algorithm of the second network standard for a PDCP entity that is of the second network standard and that corresponds to the first DRB.

In a possible design manner, the processing module is further configured to determine, based on a PLMN ID, whether the first message is from the access network device of the first network standard, where the PLMN ID is from the access network device that sends the first message.

In a possible design manner, the transceiver module is further configured to send user plane indication information to the access network device of the first network standard or the core network element of the first network standard. The user plane indication information may indicate whether the communication apparatus supports the user plane integrity protection.

In a possible design manner, the user plane integrity protection indication information, the integrity protection algorithm identifier of the second network standard, and the first indication information may be encapsulated in a radio bearer configuration Radiobearerconfig information element of the first message.

In a possible design manner, the first network standard may include 4th generation 4G, long term evolution LTE, or evolved packet system EPS.

In a possible design manner, the second network standard may include 5th generation 5G, new radio NR, or 5th generation system 5GS.

It should be noted that the transceiver module according to the sixth aspect may include a receiving module and a sending module. The receiving module is configured to receive data and/or signaling from the access network device of the first network standard and/or the core network element of the first network standard. The sending module is configured to send data and/or signaling to the access network device of the first network standard and/or the core network element of the first network standard. A specific implementation of the transceiver module is not specifically limited in this application.

Optionally, the communication apparatus according to the sixth aspect may further include a storage module, and the storage module stores a program or instructions. When the processing module executes the program or the instructions, the communication apparatus according to the sixth aspect is enabled to perform the method according to the second aspect.

It should be noted that the communication apparatus according to the sixth aspect may be the terminal device, or may be a chip (system) or another component or assembly that may be disposed in the terminal device. This is not limited in this application.

In addition, for technical effects of the communication apparatus according to the sixth aspect, refer to the technical effects of the communication method in any one of the possible implementations of the second aspect. Details are not described herein again.

According to a seventh aspect, a communication apparatus is provided. The communication apparatus includes a processing module and a transceiver module. When a first condition is met, the processing module is configured to obtain user plane integrity protection indication information and an integrity protection algorithm identifier of a first network standard. The transceiver module is configured to send a fourth message to a terminal device. The processing module is further configured to activate user plane integrity protection for a first DRB based on a first key and an integrity protection algorithm of the first network standard. The fourth message includes the user plane integrity protection indication information. The first condition includes: determining to establish the first data radio bearer DRB between the communication apparatus and the terminal device, and determining to enable the user plane integrity protection for the first DRB. The user plane integrity protection indication information indicates to enable the user plane integrity protection for the first DRB.

In a possible design manner, the fourth message may further include first indication information and/or second indication information. The first indication information may indicate the terminal device to determine the first key by using a master key, and the second indication information may indicate to activate the user plane integrity protection for the first DRB based on the integrity protection algorithm identifier of the first network standard. Optionally, the second indication information may indicate to activate the user plane integrity protection based on the currently used integrity protection algorithm of the first network standard, or the second indication information includes the integrity protection algorithm identifier of the first network standard.

In a possible design manner, the first key may be determined based on the master key, the integrity protection algorithm identifier of the first network standard, and a second algorithm type distinguisher.

In a possible design manner, the first key may be determined based on the master key, an integrity protection algorithm identifier of the second network standard, and a first algorithm type distinguisher, and the integrity protection algorithm identifier of the second network standard is determined based on the integrity protection algorithm identifier of the first network standard.

In a possible design manner, a value of the first algorithm type distinguisher may be 0x07. For example, the first algorithm type distinguisher may be N-UP-int-alg.

In a possible design manner, the processing module is further configured to activate the user plane integrity protection for the first DRB based on the second indication information and by using the first key and the integrity protection algorithm of the first network standard.

In a possible design manner, the processing module is further configured to configure the first key and the integrity protection algorithm of the first network standard for a packet data convergence protocol PDCP entity that is of the second network standard and that corresponds to the first DRB.

In a possible design manner, the first condition may further include: The terminal device supports the user plane integrity protection.

In a possible design manner, the transceiver module is further configured to receive user plane indication information from the terminal device or a core network element of the first network standard. The user plane indication information may indicate whether the terminal device supports the user plane integrity protection, and the first condition may be determined based on the user plane indication information.

In a possible design manner, the user plane integrity protection indication information, the first indication information, and the second indication information may be encapsulated in a Radiobearerconfig information element of the fourth message.

In a possible design manner, the user plane integrity protection indication information and the first indication information may be encapsulated in a radio bearer configuration Radiobearerconfig information element of the fourth message.

In a possible design manner, the first network standard may include 4th generation 4G, long term evolution LTE, or evolved packet system EPS.

In a possible design manner, the second network standard may include 5th generation 5G, new radio NR, or 5th generation system 5GS.

It should be noted that the transceiver module according to the seventh aspect may include a receiving module and a sending module. The receiving module is configured to receive data and/or signaling from the terminal device and/or the core network element of the first network standard. The sending module is configured to send data and/or signaling to the terminal device and/or the core network element of the first network standard. A specific implementation of the transceiver module is not specifically limited in this application.

Optionally, the communication apparatus according to the seventh aspect may further include a storage module, and the storage module stores a program or instructions. When the processing module executes the program or the instructions, the communication apparatus according to the seventh aspect is enabled to perform the method according to the third aspect.

It should be noted that the communication apparatus according to the seventh aspect may be the access network device of the first network standard, or may be a chip (system) or another component or assembly that may be disposed in the access network device of the first network standard. This is not limited in this application.

In addition, for technical effects of the communication apparatus according to the seventh aspect, refer to the technical effects of the communication method in any one of the possible implementations of the third aspect. Details are not described herein again.

According to an eighth aspect, a communication apparatus is provided. The communication apparatus includes a processing module and a transceiver module. The transceiver module is configured to receive a fourth message. When the fourth message is from an access network device of a first network standard, and user plane integrity protection indication information indicates to enable user plane integrity protection for a first DRB, the processing module is configured to activate the user plane integrity protection for the first DRB based on a first key and an integrity protection algorithm of a first network standard. The fourth message includes the user plane integrity protection indication information, and the user plane integrity protection indication information indicates to enable the user plane integrity protection for the first data radio bearer DRB.

In a possible design manner, the fourth message may further include first indication information, and the first indication information may indicate to determine the first key by using a master key. The processing module is further configured to determine the first key based on the first indication information and by using the master key.

In a possible design manner, the first key may be determined based on the master key, an integrity protection algorithm identifier of the first network standard, and a second algorithm type distinguisher.

In a possible design manner, the first key may be determined based on the master key, an integrity protection algorithm identifier of a second network standard, and a first algorithm type distinguisher, and the integrity protection algorithm identifier of the second network standard is determined based on the integrity protection algorithm identifier of the first network standard.

In a possible design manner, a value of the first algorithm type distinguisher may be 0x07. For example, the first algorithm type distinguisher may be N-UP-int-alg.

In a possible design manner, the processing module is further configured to obtain the integrity protection algorithm of the first network standard from an access stratum (access stratum, AS) security context based on the user plane integrity protection indication information.

In a possible design manner, the fourth message may further include second indication information, and the second indication information indicates to activate the user plane integrity protection for the first DRB based on the currently used integrity protection algorithm identifier of the first network standard. According to the communication method provided in the fourth aspect, the processing module is further configured to obtain the integrity protection algorithm of the first network standard from the AS security context based on the second indication information.

In a possible design manner, the fourth message further includes second indication information, the second indication information includes the integrity protection algorithm identifier of the first network standard, and the processing module is further configured to obtain the integrity protection algorithm of the first network standard based on the integrity protection algorithm identifier of the first network standard.

In a possible design manner, the processing module is further configured to configure the first key and the integrity protection algorithm of the first network standard for a PDCP entity that is of the second network standard and that corresponds to the first DRB.

In a possible design manner, a sending module is further configured to send user plane indication information to the access network device of the first network standard or the core network element of the first network standard. The user plane indication information may indicate whether the communication apparatus supports the user plane integrity protection.

In a possible design manner, the processing module is further configured to determine, based on a public land mobile network identifier PLMN ID, whether the fourth message is from the access network device of the first network standard, where the PLMN ID is from the access network device that sends the fourth message.

In a possible design manner, the user plane integrity protection indication information, the first indication information, and the second indication information may be encapsulated in a radio bearer configuration Radiobearerconfig information element of the fourth message.

In a possible design manner, the user plane integrity protection indication information and the first indication information may be encapsulated in a radio bearer configuration Radiobearerconfig information element of the fourth message.

In a possible design manner, the first network standard may include 4th generation 4G, long term evolution LTE, or evolved packet system EPS.

In a possible design manner, the second network standard may include 5th generation 5G, new radio NR, or 5th generation system 5GS.

It should be noted that the transceiver module according to the eighth aspect may include a receiving module and a sending module. The receiving module is configured to receive data and/or signaling from the access network device of the first network standard and/or the core network element of the first network standard. The sending module is configured to send data and/or signaling to the access network device of the first network standard and/or the core network element of the first network standard. A specific implementation of the transceiver module is not specifically limited in this application.

Optionally, the communication apparatus according to the eighth aspect may further include a storage module. The storage module stores a program or instructions. When the processing module executes the program or the instructions, the communication apparatus according to the eighth aspect is enabled to perform the method according to the fourth aspect.

It should be noted that the communication apparatus according to the eighth aspect may be the terminal device, or may be a chip (system) or another component or assembly that may be disposed in the terminal device. This is not limited in this application.

In addition, for technical effects of the communication apparatus according to the eighth aspect, refer to the technical effects of the communication method in any one of the possible implementations of the fourth aspect. Details are not described herein again.

According to a ninth aspect, a communication apparatus is provided. The communication apparatus includes a processor. The processor is coupled to a memory, and the memory is configured to store a computer program.

The processor is configured to execute the computer program stored in the memory, so that the communication method according to any one of the possible implementations of the first aspect to the fourth aspect is performed.

In a possible design, the communication apparatus according to the ninth aspect may further include a transceiver. The transceiver may be a transceiver circuit or an input/output port. The transceiver may be used by the communication apparatus to communicate with another device.

It should be noted that, the input port may be configured to implement a receiving function related to the first aspect to the fourth aspect, and the output port may be configured to implement a sending function related to the first aspect to the fourth aspect.

In this application, the communication apparatus according to the ninth aspect may be an access network device of a first network standard, a terminal device, or a core network element of the first network standard, or a chip or a chip system disposed inside an access network device of a first network standard, a terminal device, or a core network element of the first network standard.

In addition, for technical effects of the communication apparatus according to the ninth aspect, refer to the technical effects of the communication method in any one of the implementations of the first aspect to the fourth aspect. Details are not described herein again.

According to a tenth aspect, a communication system is provided. The communication system includes the communication apparatus according to the fifth aspect and the communication apparatus according to the sixth aspect. Alternatively, the communication system includes the communication apparatus according to the seventh aspect and the communication apparatus according to the eighth aspect.

Alternatively, the communication system includes the communication apparatus according to the fifth aspect and configured to implement the method according to the first aspect, and the communication apparatus according to the sixth aspect and configured to implement the method according to the second aspect. Alternatively, the communication system includes the communication apparatus according to the seventh aspect and configured to implement the method according to the third aspect, and the communication apparatus according to the eighth aspect and configured to implement the method according to the fourth aspect.

For example, the communication system may include an access network device of a first network standard and a terminal device, and may further include a core network element of the first network standard.

According to an eleventh aspect, a chip system is provided. The chip system includes a logic circuit and an input/output port. The logic circuit is configured to implement a processing function related to the first aspect to the fourth aspect, and the input/output port is configured to implement a transceiver function related to the first aspect to the fourth aspect. Specifically, the input port may be configured to implement a receiving function related to the first aspect to the fourth aspect, and the output port may be configured to implement a sending function related to the first aspect to the fourth aspect.

In a possible design, the chip system further includes a memory. The memory is configured to store program instructions and data for implementing a function related to the first aspect to the fourth aspect.

The chip system may include a chip, or may include a chip and another discrete device.

According to a twelfth aspect, a computer-readable storage medium is provided, including a computer program or instructions. When the computer program or the instructions are run on a computer, the communication method according to any one of the possible implementations of the first aspect to the fourth aspect is performed.

According to a thirteenth aspect, a computer program product is provided, including a computer program or instructions. When the computer program or the instruction are run on a computer, the communication method according to any one of the possible implementations of the first aspect to the fourth aspect is performed.

### BRIEF DESCRIPTION OF DRAWINGS

FIG. 1 is a schematic diagram of an architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic diagram of a structure of a communication apparatus according to an embodiment of this application; and
FIG. 6 is a schematic diagram of a structure of another communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an internet of vehicles communication system, a 4th generation (4th generation, 4G) mobile communication system, such as a long term evolution (long term evolution, LTE) system, a worldwide interoperability for microwave access (worldwide interoperability for microwave access, WiMAX) communication system, a 5th generation (5th generation, 5G) mobile communication system, such as a new radio (new radio, NR) system, and a future communication system, such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

Terms "of (of)", "corresponding (corresponding, related)", and "corresponding (corresponding)" may be interchangeably used sometimes. It should be noted that meanings expressed by the terms are consistent when differences between the terms are not emphasized.

In embodiments of this application, a subscript, for example, W₁, may sometimes be written in an incorrect form, for example, W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

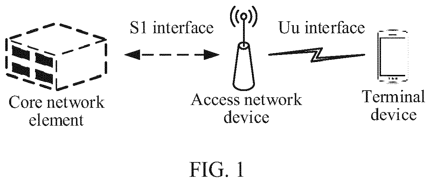

For ease of understanding embodiments of this application, a communication system shown in FIG. 1 is first used as an example to describe in detail a communication system applicable to embodiments of this application. For example, FIG. 1 is a schematic diagram of an architecture of a communication system to which a communication method according to an embodiment of this application is applicable.

As shown in FIG. 1, the communication system includes a terminal device and an access network device. Optionally, the communication system may further include a core network element. The access network device may communicate with the terminal device through a logical interface (for example, a Uu interface), and the core network element may communicate with the access network device through a logical interface (for example, an S1 interface).

The terminal device is a terminal device accessing the communication system and having a wireless transceiver function, or a chip or a chip system that may be disposed in the terminal device. The terminal device may also be referred to as a sensing device, user equipment (user equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device in embodiments of this application may be customer premises equipment (customer premise equipment, CPE), a mobile phone (mobile phone), a wireless data card, a personal digital assistant (personal digital assistant, PDA) computer, a laptop computer (laptop computer), a tablet computer (Pad), a computer with a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home) (such as a game console, a smart television, a smart speaker, a smart refrigerator, or fitness equipment), an in-vehicle terminal, or an RSU with a terminal function. The access terminal may be a cellular phone (cellular phone), a cordless phone, a session initiation protocol (session initiation protocol, SIP) phone, a wireless local loop (wireless local loop, WLL) station, a handheld device (handset) with a wireless communication function, a computing device, another processing device connected to a wireless modem, a wearable device, or the like. The customer premises equipment has a larger size and a more powerful function than a common terminal, and may receive a signal sent by the access network device and then send the signal to another terminal device. This is equivalent to performing secondary relay on the signal sent by the access network device.

For another example, the terminal device in embodiments of this application may be an express terminal in smart logistics (for example, a device that can monitor a goods vehicle location, or a device that can monitor a goods temperature and humidity), a wireless terminal in smart agriculture (for example, a wearable device that can collect related data of poultry and animals), a wireless terminal in a smart building (for example, a smart elevator, a fire monitoring device, and a smart meter), a wireless terminal in smart healthcare (for example, a wearable device that can monitor a physiological status of a person or an animal), a wireless terminal in smart transportation (for example, a sensor such as a smart bus, a smart vehicle, a sharing bike, a charging pile monitoring device, a smart traffic light, a train detector, or a gas station, or a smart monitoring or smart parking device), or a wireless terminal in smart retail (for example, a vending machine, a self-service checkout machine, or an unattended store) For another example, the terminal device in this application may be an in-vehicle module, an in-vehicle assembly, an in-vehicle component, an in-vehicle chip, or an in-vehicle unit that is built in a vehicle as one or more components or units. The vehicle uses the in-vehicle module, the in-vehicle assembly, the in-vehicle component, the in-vehicle chip, or the in-vehicle unit that is built in the vehicle, to implement a method provided in this application.

The access network device is a device that is located on a network side of the communication system and that has a wireless transceiver function, or a chip or a chip system that may be disposed in the device. The access network device includes but is not limited to: an access point (access point, AP) in a wireless fidelity (wireless fidelity, Wi-Fi) system, such as a home gateway, a router, a server, a switch, and a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, or a transmission point (transmission and reception point, TRP or transmission point, TP). Alternatively, the access network device may be a gNB or a transmission point (TRP or TP) in a 5G system, for example, an NR system, or an antenna panel or a group of antenna panels (including a plurality of antenna panels) of a base station in a 5G system, or may be a network node, such as a baseband unit (BBU), a distributed unit (distributed unit, DU), or a road side unit (road side unit, RSU) having a base station function, that constitutes a gNB or a transmission point. It should be noted that in this application, an access network device of a first network standard may be an access network device in an LTE system, for example, an eNB; and an access network device of a second network standard may be an access network device in an NR system, for example, a gNB or an ng-eNB.

The core network element is a device that is located on a network side of the communication system and that provides a network service for the terminal device, or a chip (system) or another component or assembly that may be disposed in the device. In the LTE system, the core network element includes but is not limited to a mobility management entity (mobility management entity, MME). The mobility management entity may be responsible for managing and storing a mobility management context (for example, an identifier of the terminal device, a mobility management state, and a user security parameter) of the terminal device, and processing non-access stratum (non-access stratum, NAS) signaling (for example, an attach request (attach request), a location update request (update location request), a service request (service request), and a packet data network (packet data network, PDN) connection request (connectivity request)), is responsible for NAS signaling security, and the like. In a 5G communication system, functions of the mobility management entity may be decomposed into an access and mobility management function (access and mobility management function, AMF) and a session management function (session management function, SMF). In a future communication system, the mobility management entity may still be an MME, or an AMF and an SMF, or may have another name. This is not limited in this application. Optionally, the core network element may further include a serving gateway (serving gateway, SGW) network element, a home subscriber server (home subscriber server, HSS) + unified data management (unified data management, UDM) network element, and a session management function (session management function, SMF) + packet data gateway control plane (packet data network gateway-control plane, PGW-C) network element. The SGW network element may implement a user plane function for user plane data forwarding. The HSS+UDM network element may be configured to store subscription data of a user. In an interworking system architecture, the network element stores both 4G subscription information of the terminal device and 5G subscription information of the terminal device. The SMF+PGW-C network element may be used for session establishment, deletion, and modification management. In the interworking system architecture, the network element can provide both a 4G session management function and a 5G session management function.

It should be noted that the communication method provided in this embodiment of this application is applicable to any two nodes shown in FIG. 1, for example, the terminal device and the access network device, or the access network device and the core network element. For specific implementation, refer to the following method embodiments. Details are not described herein again.

It should be noted that, the solutions in embodiments of this application may also be used in another communication system, and a corresponding name may also be replaced with a name of a corresponding function in the another communication system.

It should be understood that FIG. 1 is merely a simplified schematic diagram of an example for ease of understanding. The communication system may further include another network device and/or another terminal device that are/is not shown in FIG. 1.

To make embodiments of this application clearer, the following collectively describes some content and concepts related to embodiments of this application.

### First: user plane security policy.

The user plane security policy is a policy used to describe whether to enable security protection for user plane data. The user plane security policy may include a user plane encryption protection policy and a user plane integrity protection policy.

The user plane encryption protection policy is a policy that may indicate whether to user plane encryption protection, and the user plane integrity protection policy is a policy that may indicate whether to enable user plane integrity protection.

The user plane encryption protection is to protect confidentiality of the user plane data during transmission, and the user plane integrity protection is to protect integrity of the user plane data during the transmission. In embodiments of this application, the integrity means that obtained signaling or data is consistent with original signaling or data and is not modified. Therefore, integrity protection is used to prevent an attacker from attacking the signaling or data. The confidentiality means that real content cannot be directly seen. Therefore, confidentiality protection is used to make the attacker "unreadable". In addition, encryption protection in embodiments of this application may also be referred to as confidentiality protection. This is uniformly described herein, and details are not described below again.

In embodiments of this application, there are a total of three protection policies: "required (required)", "not needed (not needed)", and "preferred (preferred)". "Required" indicates that security needs to be enabled, "required" indicates that security does not need to be enabled, and "preferred" prefers to be enabled or referred to as optional enabled, that is, security can be enabled or may be disabled. This is described herein, and details are not described below. The foregoing three possible values of the protection policies may be indicated by using two bits (bits). For example, 00 indicates that security does not need to be enabled, 01 indicates that security may be enabled or may not be enabled, and 11 indicates that security needs to be enabled. A quantity of bits occupied by the protection policy and meanings indicated by the values are not limited in this application.

For example, the user plane integrity protection policy is used as an example. The user plane integrity protection policy may include: user plane integrity protection enabled (required), user plane integrity protection disabled (not needed), or user plane integrity protection optional (preferred). For an example of the user plane encryption protection policy, refer to the example of the user plane integrity protection policy. Details are not described herein again.

The user plane security policy in embodiments of this application mainly relates to a security policy used on a user plane between the terminal device and the access network device. For example, the user plane security policy may include at least one of the following: a user plane encryption protection policy in a Uu connection and a user plane integrity protection policy in the Uu connection.

In this embodiment of this application, for ease of description, unless otherwise specified, the user plane encryption protection policy in the Uu connection and the user plane integrity protection policy in the Uu connection are respectively briefly referred to as the user plane encryption protection policy and the user plane integrity protection policy.

In a possible design manner, security protection indication information may be obtained according to the user plane security policy. The user plane integrity protection policy is used as an example. If the user plane integrity protection policy is required, the access network device (the terminal device) determines that user plane integrity protection indication information of corresponding user plane data is enabled. If the user plane integrity protection policy is not needed, the access network device determines that user plane integrity protection indication information of corresponding user plane data is disabled. If the user plane integrity protection policy is preferred, the access network device determines that user plane integrity protection indication information of corresponding user plane data may be enabled or disabled. For example, the access network device may determine, according to a local policy (such as a running status of the access network device, a control policy, or a regulation requirement), whether to enable the user plane integrity protection. For an example of the user plane encryption protection policy, refer to the example of the user plane integrity protection policy. Details are not described herein again.

It should be noted that, in embodiments of this application, when the user plane security policy is sent, only one of the three types ("required", "not needed", and "preferred") is usually selected for sending. In some special scenarios, at least two types may be selected for sending, and one of the types is "preferred". For example, when "not needed" and "preferred" are sent, it indicates that security protection prefers to be disabled. When "required" and "preferred" are sent, it indicates that security protection prefers to be enabled.

### Second: security capability.

The security capability indicates a security algorithm supported by the terminal device, and the security algorithm may include at least one of the following: one or more encryption protection algorithms and one or more integrity protection algorithms.

For example, for different network standards, security capabilities may be different. For example, in a 4G communication system, the security capability may be an EPS security capability; and in a 5G communication system, the security capability may be an NR security capability.

The EPS security capability may include at least one of the following algorithm identifiers: an EPS (or 4G) integrity algorithm (EPS integrity algorithm, EIA) 0 to an EIA 7, and an EPS (or 4G) encryption algorithm (EPS encryption algorithm, EEA) 0 to an EEA 7. Optionally, the algorithm identifier EIA 7 may indicate that the terminal device supports the user plane integrity protection (user plane integrity protection, UPIP). The NR security capability may include at least one of the following algorithm identifiers: an integrity algorithm for 5G (integrity algorithm for 5G, NIA) 0 to an NIA 7, and an encryption algorithm for 5G (encryption algorithm for 5G, NEA) NEA 0 to an NEA 7. The algorithm identifier identifies an algorithm. For example, the algorithm identifier EIA 1 corresponds to a SNOW 3G algorithm.

It should be noted that the integrity algorithm may also be referred to as an integrity protection algorithm, and the encryption algorithm may also be referred to as an encryption protection algorithm. In embodiments of this application, the integrity protection algorithm and the encryption protection algorithm are used as an example for description.

### Third: network standard.

The network standard refers to a type of a network. In this application, the network standard mainly refers to a type of a mobile communication network. For example, the network standard may include 2nd generation (2nd generation, 2G), global system for mobile communications (global system for mobile communications, GSM), 3rd generation (3rd generation, 3G), code division multiple access (code division multiple access, CMDA), 4G, LTE, EPS, 5G, NR, and 5GS.

It should be noted that the first network standard and the second network standard are limited in this application, provided that the first network standard and the second network standard are different network standards.

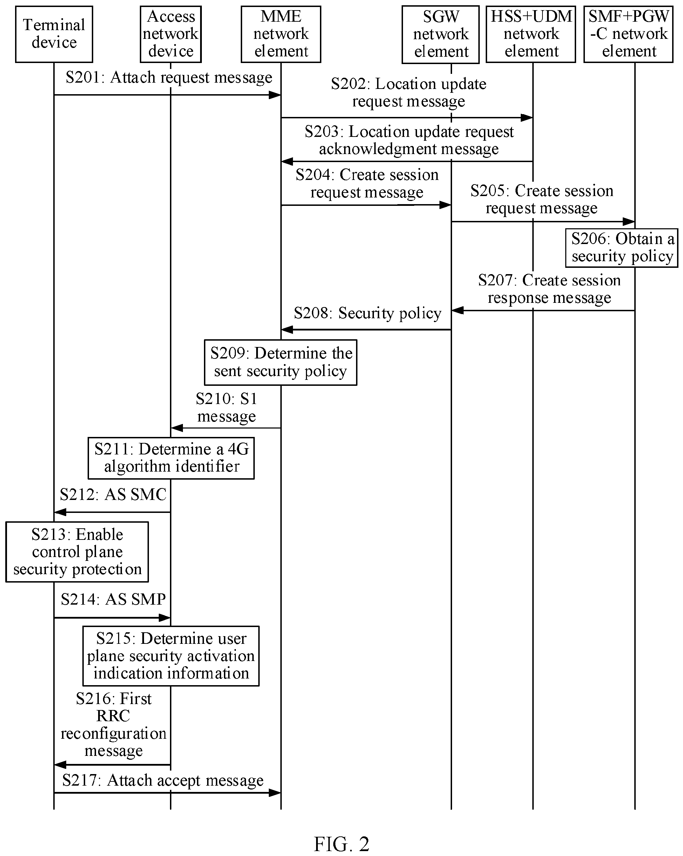

For example, FIG. 2 is a schematic flowchart of a communication method according to an embodiment of this application. The communication method is applicable to communication between the terminal device and the access network device and communication between the access network device and the core network element shown in FIG. 1. The core network element may include an MME network element, an SGW network element, an HSS+UDM network element, and an SMF+PGW-C network element. An initial access scenario is used as an example in FIG. 2.

As shown in FIG. 2, the communication method includes the following steps.

S201: The terminal device sends an attach request (attach request) message to the MME network element. Correspondingly, the MME network element receives the attach request message from the terminal device.

For example, the attach request message includes an EPS security capability of the terminal device. The EPS security capability includes an EIA 7, and the EIA 7 may indicate that the terminal device supports user plane integrity protection.

S202: The MME network element sends a location update request (location update request) message to the HSS+UDM network element. Correspondingly, the HSS+UDM network element receives the location update request message from the MME network element.

S203: The HSS+UDM network element sends a location update request acknowledgment (acknowledgment, ACK) message to the MME network element. Correspondingly, the MME network element receives the location update request acknowledgment message from the HSS+UDM network element.

S204: The MME network element sends a create session request (create session request) message to the SGW network element. Correspondingly, the SGW network element receives the create session request message from the MME network element.

S205: The SGW network element sends the create session request message to the SMF+PGW-C network element. Correspondingly, the SMF+PGW-C network element receives the create session request message from the SGW network element.

For a specific implementation of S202 to S205, refer to an existing implementation. Details are not described herein again.

S206: The SMF+PGW-C network element obtains a user plane security policy.

Optionally, the user plane security policy may include a user plane security policy 1 or a user plane security policy 2.

For example, if an interface between the SMF+PGW-C network element and the HSS+UDM network element is defined, the SMF+PGW-C network element may obtain the user plane security policy 1 from the HSS+UDM network element, or otherwise, may use the user plane security policy 2 default by the SMF+PGW-C network element.

Optionally, whether the MME network element and the SGW network element support the UPIP may be learned according to a tunneling protocol-control plane (general packet radio service tunneling protocol-control plane, GTP-C) signaling compatibility principle. If the MME network element and the SGW network element support the UPIP, a create session response message in S207 may include the user plane security policy.

S207: The SMF+PGW-C network element sends the create session response (create session response) message to the SGW network element. Correspondingly, the SGW network element receives the create session response message from the SMF+PGW-C network element.

Optionally, the create session response message may include created bearer contexts to be created (bearer contexts to be created).

Optionally, the bearer contexts to be created may include the user plane security policy, for example, a user plane integrity protection policy.

S208: The SGW network element sends the user plane security policy to the MME network element. Correspondingly, the MME network element receives the user plane security policy from the SGW.

For a specific implementation of the user plane security policy, refer to the foregoing descriptions of the user plane security policy. Details are not described herein again.

S209: The MME network element determines to send the user plane security policy to the access network device.

For example, if determining, based on the EPS security capability, that the terminal device supports the user plane integrity protection, the MME network element sends the user plane security policy to the access network device. For example, if the EPS security capability includes the EIA 7, the MME network element sends the user plane security policy to the access network device. If determining, based on the EPS security capability, that the terminal device does not support the user plane integrity protection, the MME network element may not send the user plane security policy to the access network device.

S210: The MME network element sends an S1 message to the access network device. Correspondingly, the access network device receives the S1 message from the MME network element.

For example, the S1 message may include the EPS security capability, and S1 is a logical interface between the MME network element and the access network device. Optionally, the S1 message may further include the user plane security policy.

For example, the user plane security policy may include the user plane integrity protection policy.

S211: The access network device determines a 4G algorithm identifier based on the EPS security capability of the terminal device.

For example, the EPS security capability includes one or more 4G integrity protection algorithm identifiers and one or more 4G encryption protection algorithm identifiers.

Optionally, the access network device may select a 4G encryption protection algorithm identifier from the one or more 4G encryption protection algorithm identifiers based on a locally configured algorithm priority list and the EPS security capability.

Optionally, the access network device may select a 4G integrity protection algorithm identifier from the one or more 4G integrity protection algorithm identifiers based on the locally configured algorithm priority list and the EPS security capability.

Further, in some embodiments, the access network device derives a control plane encryption protection key Krrc-enc based on an access network device key KeNB, the selected 4G encryption protection algorithm identifier (for example, an EEA 1, an EEA 2, or an EEA 3), and an algorithm type distinguisher (for example, RRC-enc-alg, where a value is 0x03). Krrc-enc is used to perform encryption protection on RRC messages of the terminal device and the access network device, that is, is used to activate encryption protection for a signaling radio bearer (signaling radio bearer, SRB).

Optionally, the access network device key KeNB may be obtained from an initial context setup request message.

In some embodiments, the access network device derives a control plane integrity protection key Krrc-int based on the access network device key KeNB, the selected 4G integrity protection algorithm identifier (for example, the EIA 1, the EIA 2, or the EIA 3), and an algorithm type distinguisher (for example, RRC-int-alg, where a value is 0x04). Krrc-int is used to perform integrity protection on the RRC messages of the terminal device and the access network device, that is, is used to activate integrity protection for the signaling radio bearer (signaling radio bearer, SRB).

In some embodiments, the access network device derives a user plane encryption protection key Kup-enc based on the access network device key KeNB, the selected 4G encryption protection algorithm identifier (for example, the EEA 1, the EEA 2, or the EEA 3), and an algorithm type distinguisher (for example, UP-enc-alg, where a value is 0x05). Kup-enc is used to perform encryption protection on user plane data of the terminal device and the access network device.

Further, the access network device may activate security protection between the access network device and the terminal device based on the derived keys and a selected 4G security algorithm.

In some embodiments, the access network device may activate control plane encryption protection between the access network device and the terminal device based on Krrc-enc and the selected 4G encryption protection algorithm.

In some embodiments, the access network device may activate control plane integrity protection between the access network device and the terminal device based on Krrc-int and the selected 4G integrity protection algorithm (for example, a SNOW 3G algorithm corresponding to the EIA 1), for example, activate RRC integrity protection.

In some embodiments, the access network device may activate user plane encryption protection between the access network device and the terminal device based on Kup-enc and the selected 4G encryption protection algorithm.

For example, that the access network device activates integrity protection indicates that after activating the integrity protection, the access network device performs, by using the 4G integrity protection algorithm and Krrc-int or Kup-int, integrity protection on a sent RRC message or user plane message, and performs integrity check on the received RRC message or user plane message by using the 4G integrity protection algorithm and Krrc-int or Kup-int.

For example, that the access network device activates encryption protection indicates that the RRC message or the user plane message sent by the access network device after the encryption protection is activated is encrypted by using the 4G encryption protection algorithm and Krrc-enc or Kup-enc, and the received RRC message or user plane message is decrypted by using the 4G encryption protection algorithm and Krrc-enc or Kup-enc.

Optionally, the access network device may store the EPS security capability, the user plane security policy, Krrc-enc, Krrc-int, Kup-enc, the selected 4G encryption protection algorithm, and the selected 4G integrity protection algorithm as an AS security context of the terminal device.

S212: The access network device sends an AS security mode command (security mode command, SMC) message to the terminal device. Correspondingly, the terminal device receives the AS SMC message from the access network device.

Optionally, the security mode command message may include the 4G encryption protection algorithm identifier, and may further include the 4G integrity protection algorithm identifier.

S213: The terminal device enables control plane security protection.

In some embodiments, the terminal device derives the control plane encryption protection key Krrc-enc based on the access network device key KeNB, the 4G encryption protection algorithm identifier, and the algorithm type distinguisher.

In some embodiments, the terminal device derives the control plane integrity protection key Krrc-int based on the access network device key KeNB, the selected 4G integrity protection algorithm identifier, and the algorithm type distinguisher.

In some embodiments, the terminal device derives the user plane encryption protection key Kup-enc based on the access network device key KeNB, the selected 4G encryption protection algorithm identifier, and the algorithm type distinguisher.

Further, the terminal device may activate the security protection between the access network device and the terminal device based on the derived keys and the 4G security algorithm.

In some embodiments, the terminal device may activate the control plane encryption protection between the access network device and the terminal device based on Krrc-enc and the 4G encryption protection algorithm.

In some embodiments, the terminal device may activate the control plane integrity protection between the access network device and the terminal device based on Krrc-int and the selected 4G integrity protection algorithm, for example, activate the RRC integrity protection.

In some embodiments, the terminal device may activate the user plane encryption protection between the access network device and the terminal device based on Kup-enc and the selected 4G encryption protection algorithm. In other words, in addition to the control plane security protection, the terminal device may further activate the user plane encryption protection.

For example, that the terminal device activates the integrity protection indicates that after activating the integrity protection, the terminal device performs, by using the 4G integrity protection algorithm and Krrc-int or Kup-int, integrity protection on a sent RRC message or user plane message, and performs integrity check on the received RRC message or user plane message by using the 4G integrity protection algorithm and Krrc-int or Kup-int.

For example, that the terminal device activates the encryption protection indicates that an RRC message or a user plane message sent by the terminal device after the encryption protection is activated is encrypted by using the 4G encryption protection algorithm and Krrc-enc or Kup-enc, and the received RRC message or user plane message is decrypted by using the 4G encryption protection algorithm and Krrc-enc or Kup-enc.

Optionally, the terminal device may store Krrc-enc, Krrc-int, Kup-enc, the selected 4G encryption protection algorithm, and the selected 4G integrity protection algorithm as the AS security context of the terminal device.

S214: The terminal device sends an AS security mode complete (security mode complete, SMP) message to the access network device. Correspondingly, the access network device receives the AS SMP message from the terminal device.

S215: The access network device determines user plane security activation indication information.

Optionally, the access network device may determine the user plane security activation indication information based on the EPS security capability and/or the user plane security policy.

For example, if obtaining the user plane security policy from the MME, the access network device determines the user plane security activation indication information according to the user plane security policy.

For example, if the access network device does not obtain the user plane security policy from the MME, but the EIA 7 in the EPS security capability indicates that the terminal device supports the user plane integrity protection, the access network device determines the user plane security activation indication information according to the preconfigured user plane security policy.

If the user plane security activation indication information indicates encryption disabled (cipheringDisabled), it indicates that the encryption protection is disabled; otherwise, it indicates that the encryption protection is enabled. For example, if the access network device has enabled the user plane encryption protection in S211, the user plane encryption protection may indicate to be disabled in S215.

If a user plane integrity protection state indicates integrity protection (integrityProtection), it indicates that the integrity protection is enabled; otherwise, it indicates that the integrity protection is disabled.

For example, the access network device may enable, based on the user plane security activation indication information, the user plane encryption protection between the access network device and the terminal device, and do not enable the user plane integrity protection between the access network device and the terminal device.

It should be noted that, after determining the user plane security activation indication information, the access network device may immediately activate the user plane security protection, or may activate the user plane security protection before receiving the user plane data. This is not limited in this application.

S216: The access network device sends a first radio resource control (radio resource control, RRC) reconfiguration message to the terminal device. Correspondingly, the terminal device receives the first RRC reconfiguration message from the access network device.

Optionally, the first RRC reconfiguration message includes the user plane security activation indication information.

Optionally, the first RRC reconfiguration message may not carry the user plane security activation indication information. This is an implicit indication indicating that by default, the user plane encryption protection is enabled, and the user plane integrity protection is disabled.

For example, the terminal device may determine, based on the user plane security activation indication information carried in the first RRC reconfiguration message, to enable the user plane security encryption protection between the terminal device and the access network device (or not to enable the user plane security encryption protection again if the user plane security encryption protection has been enabled in S213), and not to enable the user plane integrity protection. Then, encryption protection is performed on the user plane data sent between the terminal device and the access network device, and integrity protection cannot be performed.

In a possible design manner, the terminal device may send an RRC reconfiguration complete (RRC connection reconfiguration complete) message to the access network device. Correspondingly, the access network device receives the RRC reconfiguration complete message from the terminal device.

S217: The MME network element sends an attach accept (attach accept) message to the terminal device. Correspondingly, the terminal device receives the attach accept message from the MME network element.

Optionally, the attach accept message may indicate the terminal device to complete initial access.

In the communication method shown in FIG. 2, the user plane encryption protection and integrity protection may be enabled, but a parameter obtained by the access network device and the terminal device to activate the user plane integrity protection and a solution for activating the user plane integrity protection are not provided.

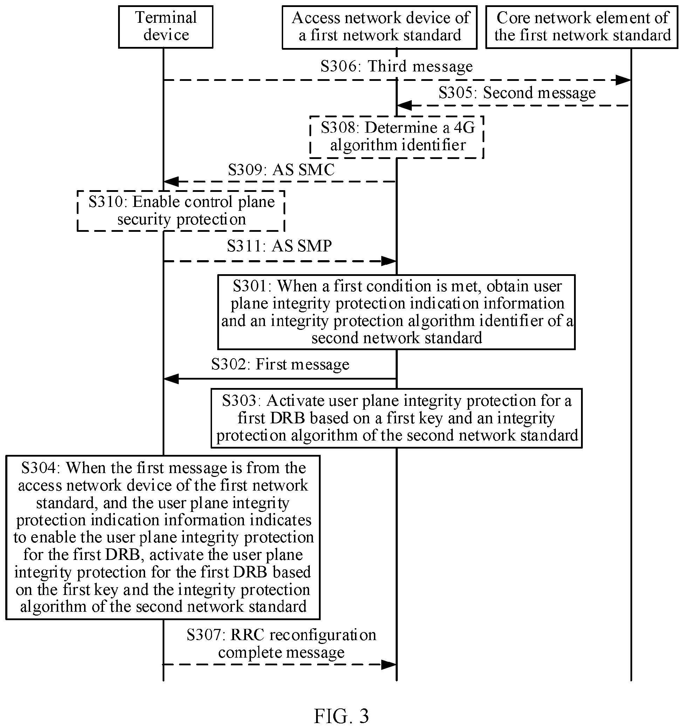

For example, FIG. 3 is a schematic flowchart of another communication method according to an embodiment of this application. The communication method is applicable to communication between the terminal device and the access network device, and communication between the access network device and the core network element shown in FIG. 1. The method shown in FIG. 3 is applicable to any scenario in which user plane integrity protection needs to be flexibly enabled, for example, a plurality of scenarios in which a DRB is established or reestablished, such as initial access, PDN session establishment, dedicated bearer activation, X2 handover (where X2 is a communication interface between the access network devices), and S1 handover, and describes a solution for activating the user plane integrity protection.

As shown in FIG. 3, the communication method includes the following steps.

S301: When a first condition is met, the access network device of a first network standard obtains user plane integrity protection indication information and an integrity protection algorithm identifier of a second network standard.

For example, the first network standard may include 4G, LTE, or EPS.

For example, the second network standard may include 5G, NR, or 5GS.

In some embodiments, the first condition includes: determining to establish a first DRB between the access network device of the first network standard and the terminal device, and determining to enable user plane integrity protection for the first DRB.

For example, the access network device of the first network standard may determine to establish a DRB for the terminal device in an attach (attach) procedure, to establish a default EPS bearer, or may determine to establish a DRB in a PDN connection establishment process or a dedicated bearer activation process, to establish a dedicated EPS bearer, or may restore a DRB on a new access network device in a mobility process, for example, perform handover or reestablishment.

In some embodiments, the first condition may further include: The terminal device supports the user plane integrity protection.

It should be noted that the terminal device may support the user plane integrity protection UPIP in a plurality of description manners.

For example, "supporting the user plane integrity protection" or "supporting the UPIP" may have a description manner based on an object (optional) and a feature, for example, is described as "supporting a feature (replaced with one of the following features 1 to 3) of an object (replaced with one of the following objects 1 to 6)" or "supporting a feature (replaced with one of the following features 1 to 3)".

For example, the objects may include: (1) an evolved packet core (evolved packet core, EPC); (2) an eNB, (3) LTE; (4) E-UTRA with EPC (E-UTRA with EPC); (5) an EPC based on dual connectivity of E-UTRA and NR radio access technologies (radio access technologies, RATs) (EPC based Dual Connectivity of E-UTRA and NR RATs); and (6) an EPS.

For example, the features may include: (1) user plane integrity protection; (2) user plane security protection; (3) on-demand user plane protection (where whether to enable user plane encryption protection and/or user plane integrity protection may be determined according to a user plane security policy).

For example, with reference to the object (1) and the feature (1), "the terminal device supports the user plane integrity protection" may be expressed as "the terminal device supports the user plane integrity protection with the EPC".

For example, with reference to the object (2) and the feature (1), "the terminal device supports the user plane integrity protection" may be expressed as "the terminal device supports the user plane integrity protection with the eNB". The eNB may be the access network device of the first network standard. That is, the terminal device supports the user plane integrity protection with the access network device of the first network standard.

In some embodiments, if the object is optional, with reference to the feature (1), this may be expressed as "the terminal device supports the user plane integrity protection".

It should be noted that similar descriptions of "supporting the user plane integrity protection" or "supporting the UPIP" used below may be replaced with "supporting a feature (replaced with one of the foregoing features 1 to 3) of an object (replaced with one of the foregoing objects 1 to 6) " or "supporting a feature (replaced with one of the foregoing features 1 to 3)".

In some embodiments, whether the terminal device supports the user plane integrity protection may be determined by the access network device of the first network standard based on user plane indication information.

For example, the user plane indication information may indicate whether the terminal device supports the user plane integrity protection.

In some embodiments, the access network device of the first network standard may obtain the user plane indication information through the following step 1a and step 2a, or step 1b.

Step 1a: The terminal device sends the user plane indication information to the core network element of the first network standard. Correspondingly, the core network element of the first network standard receives the user plane indication information from the terminal device.

Optionally, the user plane indication information may be sent by using NAS signaling.

For example, the user plane indication information may be encapsulated in capability information of the terminal device, for example, an EPS security capability of the terminal device.

Step 2a: The core network element of the first network standard sends the user plane indication information to the access network device of the first network standard. Correspondingly, the access network device of the first network standard receives the user plane indication information from the core network element of the first network standard.

Optionally, the user plane indication information may be sent by using S1 signaling.

That is, the access network device of the first network standard may obtain the user plane indication information from the terminal device via the core network element of the first network standard.

Step 1b: The terminal device sends the user plane indication information to the access network device of the first network standard. Correspondingly, the access network device of the first network standard receives the user plane indication information from the terminal device.

Optionally, the user plane indication information may be sent by using RRC signaling.

For example, the user plane indication information may be encapsulated in radio capability information of the terminal device, for example, an evolved UMTS terrestrial radio access network (evolved UMTS terrestrial radio access network, E-UTRAN) wireless capability of the terminal device.

That is, the access network device of the first network standard may directly obtain the user plane indication information from the terminal device.

In this way, the access network device of the first network standard may determine, based on the user plane indication information, whether the terminal device supports the user plane integrity protection. If the user plane indication information indicates that the terminal device supports the user plane integrity protection, the access network device of the first network standard may learn that the terminal device supports the user plane integrity protection; otherwise, the terminal device does not support the user plane integrity protection.

In a possible design manner, the user plane integrity protection indication information may indicate to enable the user plane integrity protection for the first DRB.

In other words, the user plane integrity protection corresponding to the first DRB may be activated, to implement on-demand user plane integrity protection.

Optionally, the user plane integrity protection indication information may be determined by the access network device of the first network standard according to a user plane integrity protection policy.

For example, if the user plane integrity protection policy includes enabling the user plane integrity protection, the user plane integrity protection indication information indicates to enable the user plane integrity protection for the first DRB; or if the user plane integrity protection policy includes disabling the user plane integrity protection, the user plane integrity protection indication information indicates to disable the user plane integrity protection for the first DRB.

In some embodiments, the user plane integrity protection indication information may be determined by the access network device of the first network standard according to the received user plane integrity protection policy.

Optionally, the access network device of the first network standard may obtain the user plane integrity protection policy from an external network element.

For example, the access network device of the first network standard receives the user plane integrity protection policy from an MME network element. Certainly, the access network device of the first network standard may further receive a user plane encryption protection policy. This is not limited in this application. For a specific implementation, refer to S210 shown in FIG. 2. For a process in which the MME network element obtains the user plane integrity protection policy, refer to S204 to S208.

For another example, the access network device of the first network standard receives the user plane integrity protection policy from another access network device. The another access network device may be a source access network device in a mobility scenario such as handover or reestablishment.

In some other embodiments, the user plane integrity protection indication information may be determined by the access network device of the first network standard according to a preconfigured user plane integrity protection policy.

For example, the access network device of the first network standard preconfigures the user plane integrity protection policy. Certainly, the access network device of the first network standard may further preconfigure a user plane encryption protection policy. This is not limited in this application.

Optionally, the integrity protection algorithm identifiers of the second network standard may be 5G integrity protection algorithm identifiers, for example, an NIA 0 to an NIA 7.

In a possible design manner, the integrity protection algorithm identifier of the second network standard may be determined based on a security capability that is of the second network standard and that is of the terminal device.

For example, the security capability of the second network standard may be an NR security capability, the NR security capability includes at least one algorithm identifier, and the access network device of the first network standard may select one integrity protection algorithm identifier from the at least one algorithm identifier.

Optionally, the access network device of the first network standard may select the integrity protection algorithm identifier of the second network standard based on the NR security capability of the terminal device and a locally configured algorithm priority list.

For example, if the NR security capability reported by the terminal device indicates that the terminal device supports the NIA 1 and the NIA 2, and a priority sequence in the algorithm priority list is the NIA 3 > the NIA 2 > the NIA 1, the access network device of the first network standard may select the NIA 2 as the selected integrity protection algorithm identifier of the second network standard after considering the two.

For specific descriptions of the NR security capability, refer to the foregoing descriptions of the security capability. Details are not described herein again.

Optionally, the access network device of the first network standard may obtain, in a plurality of manners, the security capability that is of the second network standard and that is of the terminal device.

In a possible design manner, the integrity protection algorithm identifier of the second network standard is determined based on a security capability of the first network standard.

For example, the access network device of the first network standard may determine the security capability of the second network standard based on the security capability of the first network standard, and determine the integrity protection algorithm identifier of the second network standard based on the security capability of the second network standard.

Optionally, when the terminal device supports the user plane integrity protection, the access network device of the first network standard determines the security capability of the second network standard based on the security capability of the first network standard, where the security capability of the second network standard includes the integrity protection algorithm identifier of the second network standard. In this way, a power consumption waste can be avoided. Specifically, the security capability of the second network standard is determined when the terminal device does not support the user plane integrity protection, but the user plane integrity protection cannot be implemented. This generates a meaningless operation, and causes the power consumption waste.

In some embodiments, the security capability of the first network standard includes an integrity protection algorithm identifier of the first network standard, the security capability of the second network standard includes the integrity protection algorithm identifier of the second network standard, and the integrity protection algorithm identifier of the second network standard is obtained by mapping the integrity protection algorithm identifier of the first network standard.

Assuming that the EPS security capability includes an EEA 1, an EEA2, an EIA 1, and an EIA 2, a mapped NR security capability include an NEA 1, an NEA 2, the NIA 1, and the NIA 2. Specifically, the NEA 1 is obtained through mapping based on the EEA 1, the NEA 2 is obtained through mapping based on the EEA 2, the NIA 1 is obtained through mapping based on the EIA 1, and the NIA 2 is obtained through mapping based on the EIA 2. This mapping method is also applicable for an EIA 3 to an EIA 7 and an EEA 3 to an EEA 7.

For example, integrity protection algorithms (SNOW 3G algorithms) identified by the 4G integrity protection algorithm identifier EIA 1 and the 5G integrity protection algorithm identifier NIA 1 are the same. Similarly, integrity protection algorithms (advanced encryption standard (advanced encryption standard, AES) algorithms) identified by the EIA 2 and the NIA 2 are the same, integrity protection algorithms (ZUC algorithms) identified by the EIA 3 and the NIA 3 are the same, and the like. In this way, the integrity protection algorithm identifier of the second network standard may be obtained by mapping the integrity protection algorithm identifier of the first network standard.

In some embodiments, the communication method shown in FIG. 3 may further include: S305: The core network element of the first network standard sends a second message to the access network device of the first network standard. Correspondingly, the access network device of the first network standard receives the second message from the core network element of the first network standard.

Optionally, the second message includes the security capability that is of the first network standard and that is of the terminal device.

For example, the second message may be an initial context setup request (initial context setup request) message.

Optionally, the access network device of the first network standard may store, as an AS security context of the terminal device, the security capability that is of the first network standard and that is of the terminal device.

In another possible design manner, the security capability of the second network standard may be received by the access network device of the first network standard from the core network element of the first network standard.

For example, the second message may further include the security capability that is of the second network standard and that is of the terminal device.

Optionally, the access network device of the first network standard may store the NR security capability of the terminal device in the AS security context of the terminal device.

If the core network element of the first network standard is a conventional MME network element, the second message may not include the security capability of the second network standard. This is because if the MME network element is the conventional MME network element, the MME network element may not correctly identify the security capability of the second network standard, and therefore cannot send the security capability to the access network device. If the MME network element is not the conventional MME network element, for example, an MME network element supporting the UPIP, the MME network element may identify the security capability that is of the second network standard and that is of the terminal device. In this case, the second message may include the security capability that is of the second network standard and that is of the terminal device.

In some embodiments, the communication method shown in FIG. 3 may further include: S306: The terminal device sends a third message to the core network element of the first network standard. Correspondingly, the core network element of the first network standard receives the third message from the terminal device.

Optionally, the third message may include the security capability of the first network standard.

Optionally, S306 may include: When the terminal device supports the user plane integrity protection, the terminal device sends the security capability of the second network standard to the core network element of the first network standard. That is, the third message may further include the security capability of the second network standard.

For example, the third message may be an attach request message or a tracking area update (tracking area update, TAU) request message.

S302: The access network device of the first network standard sends a first message to the terminal device. Correspondingly, the terminal device receives the first message.

For example, the first message may include the user plane integrity protection indication information and the integrity protection algorithm identifier of the second network standard.

In some embodiments, the first message may further include first indication information.

Optionally, the first indication information may indicate to determine a first key by using a master key.

For example, the master key may be a key KeNB of the access network device of the first network standard.

When the communication method shown in FIG. 3 is applied to a dual connectivity scenario, the key of the access network device of the first network standard may be referred to as the master key, and a key of an access network device of the second network standard may be referred to as a secondary (secondary) key.

For example, the first key may be a user plane integrity protection key, and the first key may be used to perform integrity protection on user plane data between the terminal device and the access network device. For example, the first key may be Kup-int.

For example, the first message may be an RRC connection reconfiguration (RRC connection reconfiguration) message.

In a possible design manner, the user plane integrity protection indication information and the integrity protection algorithm identifier of the second network standard may be encapsulated in a radio bearer configuration (Radiobearerconfig) information element of the first message. Optionally, the first indication information may alternatively be encapsulated in the radio bearer configuration information element of the first message.

For example, the user plane integrity protection indication information is encapsulated into a PDCP configuration (PDCP-config) of the Radiobearerconfig information element. For example, an integrity protection (integrityProtection) information element is encapsulated in the PDCP-config.

In some embodiments, when the user plane integrity protection indication information indicates that the user plane integrity protection is not enabled (or disabled), no information element may be encapsulated in the PDCP-config. In this case, the integrity protection is disabled by default.

For example, the integrity protection algorithm identifier of the second network standard may be encapsulated in a security algorithm configuration (securityAlgorithmConfig) information element of the Radiobearerconfig information element.

For example, the first indication information may be encapsulated in a key (keyToUse) information element used in the Radiobearerconfig information element.

For example, the access network device of the first network standard may set keyToUse as the master key, so that the terminal device may generate the user plane key by using the master key based on an indication of keyToUse. For example, the first key is determined based on the master key, the integrity protection algorithm identifier of the second network standard, and a first algorithm type distinguisher (for example, N-UP-int-alg, where a value is 0x07).

Alternatively, for example, the first indication information may be implicitly indicated. The first message does not carry the keyToUse information element, and it indicates by default that the user plane key is derived by using the master key.

S303: The access network device of the first network standard activates the user plane integrity protection for the first DRB based on the first key and the integrity protection algorithm of the second network standard.

It should be noted that a sequence of S302 and S303 is not limited in this embodiment of this application.

Optionally, the first key may be determined by the access network device of the first network standard based on the master key, the integrity protection algorithm identifier of the second network standard, and the first algorithm type distinguisher. For example, the first key is a user plane integrity protection key Kup-int.

For example, a value of the first algorithm type distinguisher may be 0x07. For example, the first algorithm type distinguisher is N-UP-int-alg.

For example, the master key may be obtained from the AS security context of the terminal device.

Alternatively, optionally, the access network device of the first network standard may directly obtain, from the AS security context of the terminal device, the first key, for example, Kup-int that has been derived in advance.

In this way, the access network device of the first network standard may activate the user plane integrity protection for the first DRB based on Kup-int and the integrity protection algorithm of the second network standard. Therefore, after the access network device of the first network standard activates the user plane integrity protection, integrity protection is performed on sent user plane data by using the integrity protection algorithm of the second network standard and Kup-int, and integrity check is performed on a received user plane data packet by using the integrity protection algorithm of the second network standard and Kup-int.

Optionally, S303 may include: The access network device of the first network standard configures the first key and the integrity protection algorithm of the second network standard for a PDCP entity that is of the second network standard and that corresponds to the first DRB.

For example, the PDCP entity of the second network standard may be an NR PDCP entity.

In this way, the access network device of the first network standard activates the user plane integrity protection, to implement on-demand user plane integrity protection.

S304: When the first message is from the access network device of the first network standard, and the user plane integrity protection indication information indicates to enable the user plane integrity protection for the first DRB, the terminal device activates the user plane integrity protection for the first DRB based on the first key and the integrity protection algorithm of the second network standard.

Optionally, the terminal device may determine whether the terminal device is connected to a network of the first network standard.

For example, the terminal device may determine, based on a public land mobile network identifier PLMN ID broadcast by the access network device of the first network standard, whether the terminal device is currently connected to E-UTRA/EPC. For example, if the PLMN ID broadcast by the access network device of the first network standard does not include the 5G, the terminal device may determine that the terminal device is connected to the E-UTRA/EPC.

For example, if the user plane integrity protection indication information indicates to enable the user plane integrity protection, and the terminal device is connected to the E-UTRAN/EPC, the terminal device may activate the user plane integrity protection for the first DRB based on the first key and the integrity protection algorithm of the second network standard.

In some embodiments, the terminal device may determine, based on the PLMN ID, whether the first message is from the access network device of the first network standard, where the PLMN ID is from the access network device that sends the first message. For example, an access network device 1 broadcasts the PLMN ID, and sends the first message to the terminal device. If the PLMN ID does not include the 5G, the access network device 1 is the access network device of the first network standard, and the first message is from the access network device of the first network standard.

Optionally, the first key may be determined by the terminal device based on the master key, the integrity protection algorithm identifier of the second network standard, and the first algorithm type distinguisher (for example, N-UP-int-alg, where a value is 0x07). For example, the first key is the user plane integrity protection key Kup-int.

For example, the master key may be obtained by the terminal device from the AS security context of the terminal device based on the first indication information.

Alternatively, optionally, the terminal device may directly obtain, from the AS security context of the terminal device, the first key, for example, Kup-int that has been derived in advance.

In this way, the terminal device may activate the user plane integrity protection for the first DRB based on Kup-int and the integrity protection algorithm of the second network standard. Therefore, after activating the user plane integrity protection, the terminal device performs integrity protection on sent user plane data by using the integrity protection algorithm of the second network standard and Kup-int, and performs integrity check on a received user plane data packet by using the integrity protection algorithm of the second network standard and Kup-int.

Optionally, S304 may include: When the first message is from the access network device of the first network standard and the user plane integrity protection indication information indicates to enable the user plane integrity protection for the first DRB, the terminal device configures, based on the user plane integrity protection indication information, the first key and the integrity protection algorithm of the second network standard for a PDCP entity that is of the second network standard and that corresponds to the first DRB.

For example, an RRC layer of the terminal device may configure the first key and the integrity protection algorithm of the second network standard for an NR PDCP entity corresponding to the first DRB.

In this way, the terminal device activates the user plane integrity protection, to implement the on-demand user plane integrity protection.

In a possible design manner, the communication method shown in FIG. 3 may further include: S307. The terminal device sends an RRC reconfiguration complete message to the access network device of the first network standard. Correspondingly, the access network device of the first network standard receives the RRC reconfiguration complete message from the terminal device.

It should be noted that in this embodiment of this application, a sequence of S303 and S307 is not limited, and a sequence of S304 and S307 is not limited.

In a possible design manner, the communication method shown in FIG. 3 may further include S308 to S311. For implementations of S308 to S311, respectively refer to S211 to S214. A main difference lies in that "the 4G" is replaced with "the first network standard", and "the access network device" is replaced with "the access network device of the first network standard". In this way, the communication method shown in FIG. 3 may further implement on-demand user plane encryption protection. It should be noted that S308 to S311 may be performed before S301. This is not limited in this application.

S308: The access network device of the first network standard determines a 4G algorithm identifier based on the EPS security capability of the terminal device.

In a possible design manner, the access network device of the first network standard derives, based on the master key and the integrity protection algorithm identifier of the first network standard, the first key, for example, the user plane integrity protection key Kup-int. Kup-int is used to perform integrity protection on the user plane data between the terminal device and the access network device of the first network standard.

In other words, in a process of deriving a control plane key and a user plane encryption key, the access network device of the first network standard may derive Kup-int based on the master key KeNB and the 4G integrity protection algorithm identifier. Therefore, in S303, the access network device of the first network standard may directly obtain the first key from the AS security context of the terminal device. In S304, the terminal device may directly obtain the first key from the AS security context of the terminal device.

It should be noted that the access network device of the first network standard may activate the user plane encryption protection in S308, and does not activate the user plane encryption protection in S303.

For example, the first message in S301 may further include user plane encryption protection status indication information, for indicating to enable or disable the user plane encryption protection. If S308 to S311 are performed before S301, and the access network device of the first network standard has activated the user plane encryption protection in S308, the access network device of the first network standard may disable the enabled user plane encryption protection in S303, to further implement on-demand user plane encryption protection.

S309: The access network device of the first network standard sends an AS SMC message to the terminal device. Correspondingly, the terminal device receives the AS SMC message from the access network device of the first network standard.

S310: The terminal device enables control plane security protection.

It should be noted that in this embodiment of this application, a sequence of enabling, by the terminal device, security protection, and deriving, by the access network device of the first network standard, the key, and activating security protection in S308 is not limited.

It should be noted that the terminal device may activate the user plane encryption protection in S310, and does not activate the user plane encryption protection in S304.

For example, the first message in S301 may further include user plane encryption protection status indication information, for indicating to enable or disable the user plane encryption protection. If S308 to S311 are performed before S301, and the terminal device has activated the user plane encryption protection in S310, the terminal device may disable the enabled user plane encryption protection in S304, to further implement on-demand user plane encryption protection.

S311: The terminal device sends an AS SMP message to the access network device of the first network standard. Correspondingly, the access network device of the first network standard receives the AS SMP message from the terminal device.

Based on the communication method shown in FIG. 3, when determining to establish the first DRB and determining to enable the user plane integrity protection for the first DRB, the access network device of the first network standard obtains the user plane integrity protection indication information indicating to enable the user plane integrity protection and the integrity protection algorithm identifier of the second network standard, and sends the user plane integrity protection indication information and the integrity protection algorithm identifier of the second network standard to the terminal device. In this way, both the access network device of the first network standard and the terminal device may activate the user plane integrity protection for the first DRB based on the first key and the integrity protection algorithm of the second network standard, so that an on-demand user plane integrity protection mode of the second network standard is applied to the user plane integrity protection between the terminal device and the access network device of the first network standard, and changes to the terminal device can be reduced.

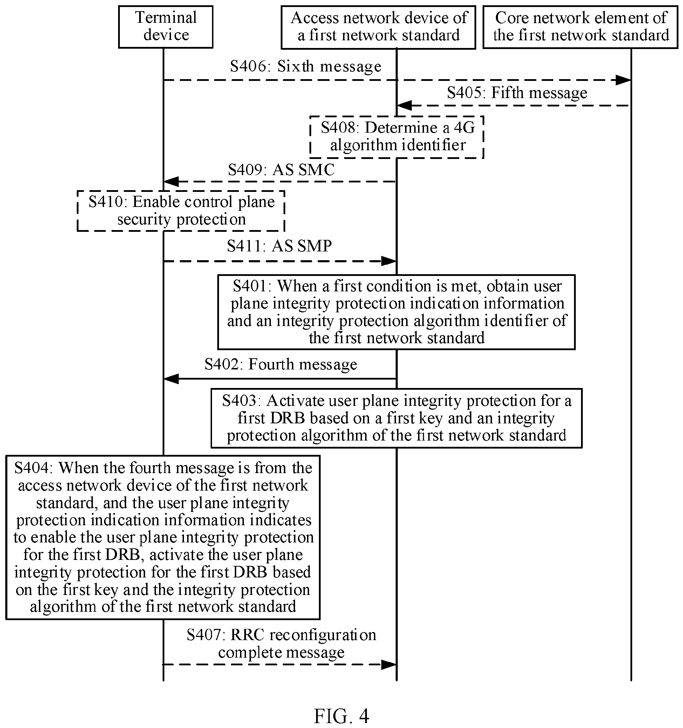

For example, FIG. 4 is a schematic flowchart of still another communication method according to an embodiment of this application. The communication method is applicable to communication between the terminal device and the access network device, and communication between the access network device and the core network element shown in FIG. 1. The method shown in FIG. 4 is applicable to any scenario in which user plane integrity protection needs to be flexibly enabled, for example, a plurality of scenarios in which a DRB is established or reestablished, such as initial access, PDN session establishment, dedicated bearer activation, X2 handover (where X2 is an interface between the access network devices), and S1 handover, and describes a solution for activating the user plane integrity protection.

As shown in FIG. 4, the communication method includes the following steps.

S401: When a first condition is met, the access network device of a first network standard obtains user plane integrity protection indication information and an integrity protection algorithm identifier of the first network standard.

Similar to the communication method shown in FIG. 3, the first network standard may include 4G, LTE, or EPS, and the second network standard may include 5G, NR, or 5GS.

In some embodiments, the first condition includes: determining to establish a first DRB between the access network device of the first network standard and the terminal device, and determining to enable user plane integrity protection for the first DRB. Optionally, the first condition may further include: The terminal device supports the user plane integrity protection. For a specific implementation of the first condition, refer to the corresponding implementation in S301. Details are not described herein again.

In some embodiments, whether the terminal device supports the user plane integrity protection may be determined by the access network device of the first network standard based on user plane indication information. For a specific implementation, refer to the corresponding implementation in S301. Details are not described herein again.

In some embodiments, for a specific implementation in which the access network device of the first network standard obtains the user plane indication information, refer to step 1a and step 2a, or step 1b in S301. Details are not described herein again.

In a possible design manner, the user plane integrity protection indication information may indicate to enable the user plane integrity protection for the first DRB. For a specific implementation, refer to the corresponding implementation in S301. Details are not described herein again.

Optionally, an integrity protection algorithm of the first network standard may be a 4G integrity protection algorithm. For details, refer to the corresponding descriptions in the foregoing security capability.

In a possible design manner, the integrity protection algorithm identifier of the first network standard may be determined based on a security capability that is of the first network standard and that is of the terminal device.

For example, the security capability of the first network standard may be an EPS security capability, the EPS security capability includes at least one algorithm identifier, and the access network device of the first network standard may select, from the at least one algorithm identifier, an integrity protection algorithm identifier, for example, an EIA 1.

Optionally, the access network device of the first network standard may select the integrity protection algorithm identifier of the first network standard based on the EPS security capability of the terminal device and a locally configured algorithm priority list. A specific implementation is similar to the implementation in S301 in which the integrity protection algorithm identifier of the second network standard is selected based on the NR security capability of the terminal device and a locally configured algorithm priority list. Details are not described herein again.

Optionally, the integrity protection algorithm identifier of the first network standard may be a currently used integrity protection algorithm identifier of the first network standard between the access network device of the first network standard and the terminal device.

For example, the access network device of the first network standard obtains the currently used integrity protection algorithm identifier of the first network standard from an AS security context of the terminal device.

In some embodiments, the communication method shown in FIG. 4 may further include: S405: A core network element of the first network standard sends a fifth message to the access network device of the first network standard. Correspondingly, the access network device of the first network standard receives the fifth message from the core network element of the first network standard.

Optionally, the fifth message includes the security capability that is of the first network standard and that is of the terminal device.

For example, the fifth message may be an initial context setup request message.

Optionally, the access network device of the first network standard may store, as the AS security context of the terminal device, the security capability that is of the first network standard and that is of the terminal device.

In some embodiments, the communication method shown in FIG. 4 may further include: S406: The terminal device sends a sixth message to the core network element of the first network standard. Correspondingly, the core network element of the first network standard receives the sixth message from the terminal device.

Optionally, the sixth message may include the security capability of the first network standard.

For example, the sixth message may be an attach request message or a tracking area update request message.

S402: The access network device of the first network standard sends a fourth message to the terminal device. Correspondingly, the terminal device receives the fourth message.

For example, the fourth message includes the user plane integrity protection indication information.

In some embodiments, the fourth message may further include first indication information and/or second indication information.

Optionally, the first indication information may indicate to determine a first key by using a master key. For a specific implementation of the first indication information, the master key, and the first key, refer to the corresponding descriptions in S302. Details are not described herein again.

Optionally, the second indication information may indicate to activate the user plane integrity protection for the first DRB by using the integrity protection algorithm of the first network standard.

For example, the second indication information may include the integrity protection algorithm identifier of the first network standard, or the second indication information may indicate to activate the user plane integrity protection by using the currently used integrity protection algorithm of the first network standard.

In this way, the second indication information may indicate to enable, by using the used integrity protection algorithm, the user plane integrity protection, namely, the integrity protection algorithm of the first network standard.

Alternatively, in some embodiments, the fourth message includes the user plane integrity protection indication information, and the user plane integrity protection indication information indicates to enable the user plane integrity protection for the first DRB, and may implicitly indicate to activate the user plane integrity protection by using the integrity protection algorithm of the first network standard.

In other words, the user plane integrity protection indication information may not only indicate to enable the user plane integrity protection, but also indicate to activate the user plane integrity protection by using the integrity protection algorithm of the first network standard.

For example, the fourth message may be an RRC connection reconfiguration message.

In a possible design manner, the user plane integrity protection indication information may be encapsulated in a Radiobearerconfig information element of the fourth message. Optionally, alternatively, the first indication information may be encapsulated in a Radiobearerconfig information element of the fourth message. Optionally, the second indication information may be encapsulated in the Radiobearerconfig information element of the fourth message, or may be encapsulated in another information element that is different from the Radiobearerconfig information element and that is of the fourth message.

For an implementation of encapsulating the user plane integrity protection indication information in the Radiobearerconfig information element, refer to the corresponding implementation in S302. Details are not described herein again.

For an implementation of encapsulating the first indication information in the Radiobearerconfig information element, refer to the corresponding implementation in S302. Details are not described herein again.

For example, the second indication information may include the integrity protection algorithm identifier of the first network standard. For the second indication information, the Radiobearerconfig information element may carry an algorithm configuration information element of the first network standard in securityAlgorithmConfig. This is different from the method shown in FIG. 3.

For example, the algorithm configuration information element of the first network standard may be used to encapsulate the integrity protection algorithm identifier of the first network standard, and may indicate to activate the user plane integrity protection for the first DRB by using the integrity protection algorithm of the first network standard.

Optionally, the second indication information may indicate to activate the user plane integrity protection by using the currently used integrity protection algorithm of the first network standard. For the second indication information, the fourth message may carry the second indication information element, but the second indication information element may not be encapsulated in the Radiobearerconfig information element. This is different from the method shown in FIG. 3.

It should be noted that a name of the information element for encapsulating the integrity protection algorithm identifier of the first network standard is not limited in this application.

S403: The access network device of the first network standard activates the user plane integrity protection for the first DRB based on the first key and the integrity protection algorithm of the first network standard.

It should be noted that a sequence of S402 and S403 is not limited in this embodiment of this application.

In some embodiments, the first key may be determined by the access network device of the first network standard based on the master key, the integrity protection algorithm identifier of the first network standard, and a second algorithm type distinguisher (for example, UP-int-alg, where a value is 0x06). For example, the first key is a user plane integrity protection key Kup-int.

For example, the master key may be obtained from the AS security context of the terminal device.

Alternatively, optionally, the access network device of the first network standard may directly obtain, from the AS security context of the terminal device, the first key, for example, Kup-int that has been derived in advance.

For example, if the integrity protection algorithm identifier of the first network standard determined in S401 or S408 is the EIA 1, the access network device of the first network standard may determine the first key Kup-int-E based on the master key and the integrity protection algorithm identifier EIA 1 of the first network standard.

In this way, the access network device of the first network standard may activate the user plane integrity protection for the first DRB based on Kup-int-E and the integrity protection algorithm of the first network standard. Therefore, after activating the user plane integrity protection, the access network device of the first network standard performs integrity protection on sent user plane data by using the integrity protection algorithm of the first network standard and Kup-int-E, and performs integrity check on a received user plane data packet by using the integrity protection algorithm of the first network standard and Kup-int-E.

In some embodiments, the first key may be determined by the access network device of the first network standard based on the master key, the integrity protection algorithm identifier of the second network standard, and a first algorithm type distinguisher (for example, N-UP-int-alg, where a value is 0x07), and the integrity protection algorithm identifier of the second network standard is determined based on the integrity protection algorithm identifier of the first network standard.

For example, the integrity protection algorithm identifier of the second network standard may be a 5G integrity protection algorithm identifier, for example, an NIA 1.

Optionally, the integrity protection algorithm identifier of the second network standard is obtained by mapping the integrity protection algorithm identifier of the first network standard by the access network device of the first network standard.

For example, if the integrity protection algorithm identifier of the first network standard determined in the foregoing S401 or the following S408 is the EIA 1, the integrity protection algorithm identifier NIA 1 of the second network standard is obtained by mapping the EIA 1. In this way, the access network device of the first network standard may determine a first key Kup-int-N based on the master key, the integrity protection algorithm identifier NIA 1 of the second network standard, and the first algorithm type distinguisher (for example, N-UP-int-alg, where a value is 0x07).

It should be noted that algorithms identified by the integrity protection algorithm identifier of the first network standard and the integrity protection algorithm identifier of the second network standard that can be mapped to each other may be the same, but the determined first keys may be different.

For example, both the EIA 1 and the NIA 1 identify a SNOW 3G algorithm, but the first key Kup-int-E determined based on the EIA 1 and a KeNB is different from the first key Kup-int-N determined based on the NIA 1 and the KeNB. Because values of information elements respectively corresponding to the integrity protection algorithm identifier of the first network standard and the integrity protection algorithm identifier of the second network standard are different, the determined first keys are different.

In this way, the access network device of the first network standard may activate the user plane integrity protection for the first DRB based on Kup-int-N and an algorithm identified by the integrity protection algorithm identifier of the second network standard (which may be referred to as the integrity protection algorithm of the first network standard or the integrity protection algorithm of the second network standard, for example, the SNOW 3G algorithm).

In a possible design manner, S403 may include: The access network device of the first network standard activates the user plane integrity protection for the first DRB based on the second indication information and by using the first key and the integrity protection algorithm of the first network standard. In this way, the access network device of the first network standard may implement on-demand user plane integrity protection based on the indication of the second indication information and by using the integrity protection algorithm of the first network standard.

In a possible design manner, S403 may include: The access network device of the first network standard configures the first key and the integrity protection algorithm of the first network standard for a PDCP entity that is of the second network standard and that corresponds to the first DRB.

In this way, the access network device of the first network standard activates the user plane integrity protection, to implement on-demand user plane integrity protection.

S404: When the fourth message is from the access network device of the first network standard, and the user plane integrity protection indication information indicates to enable the user plane integrity protection for the first DRB, the terminal device activates the user plane integrity protection for the first DRB based on the first key and the integrity protection algorithm of the first network standard.

Optionally, the terminal device may determine whether the terminal device is connected to a network of the first network standard.

For example, the terminal device may determine, based on a PLMN ID broadcast by the access network device of the first network standard, whether the terminal device is currently connected to E-UTRA/EPC. For example, if the PLMN ID broadcast by the access network device of the first network standard does not include the 5G, the terminal device may determine that the terminal device is connected to the E-UTRA/EPC.

For example, if the user plane integrity protection indication information indicates to enable the user plane integrity protection, and the terminal device is connected to the E-UTRAN/EPC, the terminal device may activate the user plane integrity protection for the first DRB based on the first key and the integrity protection algorithm of the first network standard.

In some embodiments, the terminal device may determine, based on the PLMN ID, whether the fourth message is from the access network device of the first network standard, where the PLMN ID is from the access network device that sends the fourth message. For example, an access network device 2 broadcasts the PLMN ID, and sends the fourth message to the terminal device. If the PLMN ID does not include the 5G, the access network device 2 is the access network device of the first network standard, and the fourth message is from the access network device of the first network standard.

In some embodiments, the integrity protection algorithm of the first network standard may be received by the terminal device from the access network device of the first network standard, or may be obtained by the terminal device from the AS security context of the terminal device.

Optionally, when the user plane integrity protection indication information indicates to enable the user plane integrity protection for the first DRB, the terminal device may obtain the currently used integrity protection algorithm of the first network standard from the AS security context of the terminal device.

Optionally, when the second indication information may indicate to activate the user plane integrity protection based on the currently used integrity protection algorithm of the first network standard, the terminal device may obtain the currently used integrity protection algorithm of the first network standard from the AS security context of the terminal device based on the second indication information.

Optionally, the second indication information may include the integrity protection algorithm identifier of the first network standard. In this case, the terminal device obtains the integrity protection algorithm of the first network standard based on the integrity protection algorithm identifier of the first network standard.

In some embodiments, the first key may be determined by the terminal device based on the master key, the integrity protection algorithm identifier of the first network standard, and a second algorithm type distinguisher (for example, UP-int-alg, where a value is 0x06). For example, the first key is the user plane integrity protection key Kup-int.

For example, the master key may be obtained by the terminal device from the AS security context of the terminal device based on the first indication information.

Alternatively, optionally, the terminal device may directly obtain, from the AS security context of the terminal device, the first key, for example, Kup-int that has been derived in advance.

For example, if the received integrity protection algorithm identifier of the first network standard is the EIA 1, the terminal device may determine the first key Kup-int-E based on the master key KeNB and the integrity protection algorithm identifier EIA 1 of the first network standard.

In this way, the terminal device may activate the user plane integrity protection for the first DRB based on Kup-int-E and the integrity protection algorithm of the first network standard. Therefore, after activating the user plane integrity protection, the terminal device performs integrity protection on sent user plane data by using the integrity protection algorithm of the first network standard and Kup-int-E, and performs integrity check on a received user plane data packet by using the integrity protection algorithm of the first network standard and Kup-int-E.

In some embodiments, the first key may be determined by the terminal device based on the master key, the integrity protection algorithm identifier of the second network standard, and the first algorithm type distinguisher (for example, N-UP-int-alg, where the value is 0x07), and the integrity protection algorithm identifier of the second network standard is determined based on the integrity protection algorithm identifier of the first network standard.

For example, the integrity protection algorithm identifier of the second network standard may be the 5G integrity protection algorithm identifier, for example, the NIA 1.

Optionally, the integrity protection algorithm identifier of the second network standard may be obtained by mapping the integrity protection algorithm identifier of the first network standard by the terminal device.

Optionally, the first key may be determined by the terminal device based on the second indication information and by using the master key, the integrity protection algorithm identifier of the second network standard, and the first algorithm type distinguisher (for example, N-UP-int-alg, where the value is 0x07), and the integrity protection algorithm identifier of the second network standard is obtained by mapping the integrity protection algorithm identifier of the first network standard. For a specific implementation, refer to the foregoing S403 in which the integrity protection algorithm identifier of the second network standard is obtained by mapping the integrity protection algorithm identifier of the first network standard by the access network device of the first network standard. Details are not described herein again.

For example, the integrity protection algorithm of the first network standard, the master key, and the first key that are in the AS security context of the terminal device may all be obtained in the following step S410.

In a possible design manner, in S404, that the terminal device activates the user plane integrity protection for the first DRB based on the first key and the integrity protection algorithm of the first network standard may include: The terminal device configures the first key and the integrity protection algorithm of the first network standard for the PDCP entity that is of the second network standard and that corresponds to the first DRB.

For example, an RRC layer of the terminal device may configure the first key and the integrity protection algorithm of the first network standard for the NR PDCP entity corresponding to the first DRB.

In this way, the terminal device activates the user plane integrity protection, to implement the on-demand user plane integrity protection.

In a possible design manner, the communication method shown in FIG. 4 may further include S407 to S411. For a specific implementation of S407 to S411, refer to S307 to S311. Details are not described herein again. A main difference lies in that S301 is replaced with S401, S303 is replaced with S403, and S304 is replaced with S404.

It should be noted that in this embodiment of this application, a sequence of S403 and S407 is not limited, and a sequence of S404 and S407 is not limited.

Based on the communication method shown in FIG. 4, when determining to establish the first DRB and determining to enable the user plane integrity protection for the first DRB, the access network device of the first network standard obtains the user plane integrity protection indication information indicating to enable the user plane integrity protection and the integrity protection algorithm identifier of the first network standard, and indicates the terminal device to activate the integrity protection by using the integrity protection algorithm of the first network standard. In this way, both the access network device of the first network standard and the terminal device may activate the user plane integrity protection for the first DRB based on the first key and the integrity protection algorithm of the first network standard, so that an on-demand user plane integrity protection mode of the second network standard is applied to the user plane integrity protection between the terminal device and the access network device of the first network standard, and the user plane integrity protection is activated by using the integrity protection algorithm of the first network standard, thereby implementing independent evolution of the user plane integrity protection of different network standards.

In this application, unless otherwise specified, for same or similar parts of the embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

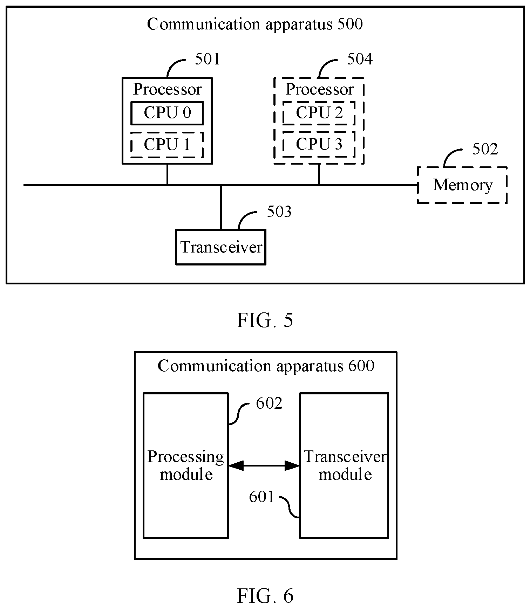

The communication methods provided in embodiments of this application are described above in detail with reference to FIG. 2 to FIG. 4. Communication apparatuses provided in embodiments of this application are described below in detail with reference to FIG. 5 and FIG. 6.

FIG. 5 is a schematic diagram of a structure of a communication apparatus that may be configured to perform a communication method according to an embodiment of this application. The communication apparatus 500 may be an access network device of a first network standard, a terminal device, or a core network element of the first network standard, or may be a chip or another component having a corresponding function that is used in the access network device of the first network standard, the terminal device, or the core network element of the first network standard. As shown in FIG. 5, the communication apparatus 500 may include a processor 501. Optionally, the communication apparatus 500 may further include one or more of a memory 502 and a transceiver 503. The processor 501 may be coupled to the one or more of the memory 502 and the transceiver 503, for example, may be connected through a communication bus, or the processor 501 may be used independently.

Each component of the communication apparatus 500 is described below in detail with reference to FIG. 5.

The processor 501 is a control center of the communication apparatus 500, and may be one processor or may be a collective term of a plurality of processing elements. For example, the processor 501 is one or more central processing units (central processing units, CPUs), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

The processor 501 may execute various functions of the communication apparatus 500 by running or executing a software program stored in the memory 502 and invoking data stored in the memory 502.

During specific implementation, in an embodiment, the processor 501 may include one or more CPUs, for example, a CPU 0 and a CPU 1 shown in FIG. 5.

During specific implementation, in an embodiment, the communication apparatus 500 may alternatively include a plurality of processors, for example, the processor 501 and a processor 504 shown in FIG. 5. Each of the processors may be a single-core processor (single-CPU), or may be a multi-core processor (multi-CPU). The processor herein may be one or more communication devices, circuits, and/or processing cores configured to process data (for example, computer program instructions).

Optionally, the memory 502 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage communication device, or any other medium that can be used to carry or store expected program code in a form of an instruction or a data structure and that is accessible by a computer. However, this is not limited thereto. The memory 502 may be integrated with the processor 501, or may exist independently, and is coupled to the processor 501 through an input/output port (not shown in FIG. 5) of the communication apparatus 500. This is not specifically limited in this embodiment of this application.

For example, the input port may be configured to implement a receiving function performed by the access network device of the first network standard, the terminal device, or the core network element of the first network standard in any one of the foregoing method embodiments, and the output port may be configured to implement a sending function performed by the access network device of the first network standard, the terminal device, or the core network element of the first network standard in any one of the foregoing method embodiments.

The memory 502 may be configured to store a software program for executing the solutions of this application, and the processor 501 controls the execution. For the foregoing specific implementation, refer to the following method embodiments. Details are not described herein again.

Optionally, the transceiver 503 is configured to communicate with another communication apparatus. For example, when the communication apparatus 500 is the access network device of the first network standard, the transceiver 503 may be configured to communicate with the terminal device and the core network element of the first network standard. For another example, when the communication apparatus 500 is the terminal device, the transceiver 503 may be configured to communicate with the access network device of the first network standard and the core network element of the first network standard. For another example, when the communication apparatus 500 is the core network element of the first network standard, the transceiver 503 may be configured to communicate with the access network device of the first network standard and the terminal device. In addition, the transceiver 503 may include a receiver and a transmitter (not separately shown in FIG. 5). The receiver is configured to implement a receiving function, and the transmitter is configured to implement a sending function. The transceiver 503 may be integrated with the processor 501, or may exist independently, and is coupled to the processor 501 through an input/output port (not shown in FIG. 5) of the communication apparatus 500. This is not specifically limited in this embodiment of this application.

It should be noted that the structure of the communication apparatus 500 shown in FIG. 5 does not constitute a limitation on the communication apparatus. An actual communication apparatus may include more or fewer components than those shown in the figure, or combine some components, or have different component arrangement.

Actions performed by the access network device of the first network standard in FIG. 2 to FIG. 4 may be performed by the processor 501 in the communication apparatus 500 shown in FIG. 5 by invoking application program code stored in the memory 502, to indicate the access network device of the first network standard to perform the actions.

Actions performed by the terminal device in FIG. 2 to FIG. 4 may be performed by the processor 501 in the communication apparatus 500 shown in FIG. 5 by invoking the application program code stored in the memory 502, to indicate the terminal device to perform the actions. This is not limited in this embodiment.

Actions performed by the core network element of the first network standard in FIG. 2 to FIG. 4 may be performed by the processor 501 in the communication apparatus 500 shown in FIG. 5 by invoking the application program code stored in the memory 502, to indicate the core network element to perform the actions. This is not limited in this embodiment.

When the communication apparatus is the access network device of the first network standard, the communication apparatus 500 may perform any one or more possible design manners related to the access network device of the first network standard in the foregoing method embodiments. When the communication apparatus is the terminal device, the communication apparatus 500 may perform any one or more possible design manners related to the terminal device in the foregoing method embodiments. When the communication apparatus is the core network element of the first network standard, the communication apparatus 500 may perform any one or more possible design manners related to the core network element of the first network standard in the foregoing method embodiments.

It should be noted that all related content of steps in the foregoing method embodiments may be cited in function description of corresponding functional modules. Details are not described herein again.

FIG. 6 is a schematic diagram of a structure of another communication apparatus according to an embodiment of this application. For ease of description, FIG. 6 shows only main components of the communication apparatus.

The communication apparatus 600 includes a transceiver module 601 and a processing module 602. The communication apparatus 600 may be the access network device of the first network standard, the terminal device, or the core network element of the first network standard in the foregoing method embodiment. The transceiver module 601 may also be referred to as a transceiver unit, and is configured to implement a transceiver function performed by the access network device of the first network standard, the terminal device, or the core network element of the first network standard in any one of the foregoing method embodiments.

It should be noted that the transceiver module 601 may include a receiving module and a sending module (not shown in FIG. 6). The receiving module is configured to receive data and/or signaling from another device, and the sending module is configured to send data and/or signaling to the another device. A specific implementation of the transceiver module is not specifically limited in this application. The transceiver module may include a transceiver circuit, a transceiver machine, a transceiver, or a communication interface.

The processing module 602 may be configured to implement a processing function performed by the access network device of the first network standard, the terminal device, or the core network element of the first network standard in any one of the foregoing method embodiments. The processing module 602 may be a processor.

In this embodiment, the communication apparatus 600 is presented in a form of functional modules obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 600 may be in a form of the communication apparatus 500 shown in FIG. 5.

For example, the processor 501 in the communication apparatus 500 shown in FIG. 5 may invoke computer-executable instructions stored in the memory 502, so that the communication method in the foregoing method embodiment is performed.

Specifically, functions/implementation processes of the transceiver module 601 and the processing module 602 in FIG. 6 may be implemented by the processor 501 in the communication apparatus 500 shown in FIG. 5 by invoking the computer-executable instructions stored in the memory 502. Alternatively, functions/implementation processes of the processing module 602 in FIG. 6 may be implemented by the processor 501 in the communication apparatus 500 shown in FIG. 5 by invoking the computer-executable instructions stored in the memory 502, and functions/implementation processes of the transceiver module 601 in FIG. 6 may be implemented by the transceiver 503 in the communication apparatus 500 shown in FIG. 5.

The communication apparatus 600 provided in this embodiment can perform the foregoing communication method. Therefore, for technical effects that can be achieved by the communication apparatus 600, refer to the foregoing method embodiment. Details are not described herein again.

In a possible design solution, the communication apparatus 600 shown in FIG. 6 may be used in the communication system shown in FIG. 1, and performs a function of the access network device of the first network standard in the communication method shown in FIG. 3.

When a first condition is met, the processing module 602 is configured to obtain user plane integrity protection indication information and an integrity protection algorithm identifier of a second network standard. The first condition includes: determining to establish a first data radio bearer DRB between the communication apparatus 600 and the terminal device, and determining to enable user plane integrity protection for the first DRB. The user plane integrity protection indication information indicates to enable the user plane integrity protection for the first DRB.

The transceiver module 601 is configured to send a first message to the terminal device. The first message includes the user plane integrity protection indication information and the integrity protection algorithm identifier of the second network standard.

The processing module 602 is further configured to activate the user plane integrity protection for the first DRB based on a first key and the integrity protection algorithm of the second network standard.

Optionally, the communication apparatus 600 may further include a storage module (not shown in FIG. 6). The storage module stores a program or instructions. When the processing module 602 executes the program or the instructions, the communication apparatus 600 is enabled to perform a function of the access network device of the first network standard in the communication method shown in FIG. 3.

It should be noted that the communication apparatus 600 may be the access network device of the first network standard, or may be a chip (system) or another component or assembly that may be disposed in the access network device of the first network standard. This is not limited in this application.

In addition, for technical effects of the communication apparatus 600, refer to the technical effects of the communication method shown in FIG. 3. Details are not described herein again.

In another possible design solution, the communication apparatus 600 shown in FIG. 6 may be used in the communication system shown in FIG. 1, and performs a function of the terminal device in the communication method shown in FIG. 3.

The transceiver module 601 is configured to receive a first message. The first message includes user plane integrity protection indication information and an integrity protection algorithm identifier of a second network standard, and the user plane integrity protection indication information indicates to enable user plane integrity protection for a first data radio bearer DRB between the access network device of the first network standard and the communication apparatus 600.

When the first message is from the access network device of the first network standard, and the user plane integrity protection indication information indicates to enable the user plane integrity protection for the first DRB, the processing module 602 is configured to activate the user plane integrity protection for the first DRB based on a first key and the integrity protection algorithm of the second network standard.

It should be noted that all related content of steps in the foregoing method embodiments may be cited in function description of corresponding functional modules. Details are not described herein again.

Optionally, the communication apparatus 600 may further include a storage module (not shown in FIG. 6). The storage module stores a program or instructions. When the processing module 602 executes the program or the instructions, the communication apparatus 600 is enabled to perform a function of the terminal device in the communication method shown in FIG. 3.

It should be noted that the communication apparatus 600 may be the terminal device, or may be a chip (system) or another component or assembly that may be disposed in the terminal device. This is not limited in this application.

In addition, for technical effects of the communication apparatus 600, refer to the technical effects of the communication method shown in FIG. 3. Details are not described herein again.

In still another possible design solution, the communication apparatus 600 shown in FIG. 6 may be used in the communication system shown in FIG. 1, and performs a function of the access network device of the first network standard in the communication method shown in FIG. 4.

When a first condition is met, the processing module 602 is configured to obtain user plane integrity protection indication information and an integrity protection algorithm identifier of a first network standard. The first condition includes: determining to establish a first data radio bearer DRB between the communication apparatus 600 and the terminal device, and determining to enable user plane integrity protection for the first DRB. The user plane integrity protection indication information indicates to enable the user plane integrity protection for the first DRB.

The transceiver module 601 is configured to send a fourth message to the terminal device. The fourth message includes the user plane integrity protection indication information and the integrity protection algorithm identifier of the first network standard.

The processing module 602 is further configured to activate the user plane integrity protection for the first DRB based on a first key and an integrity protection algorithm of the first network standard.

It should be noted that all related content of steps in the foregoing method embodiments may be cited in function description of corresponding functional modules. Details are not described herein again.

Optionally, the communication apparatus 600 may further include a storage module (not shown in FIG. 6). The storage module stores a program or instructions. When the processing module 602 executes the program or the instructions, the communication apparatus 600 is enabled to perform a function of the access network device of the first network standard in the communication method shown in FIG. 4.

It should be noted that the communication apparatus 600 may be the access network device of the first network standard, or may be a chip (system) or another component or assembly that may be disposed in the access network device of the first network standard. This is not limited in this application.

In addition, for technical effects of the communication apparatus 600, refer to the technical effects of the communication method shown in FIG. 4. Details are not described herein again.

In yet another possible design solution, the communication apparatus 600 shown in FIG. 6 may be used in the communication system shown in FIG. 1, and performs a function of the terminal device in the communication method shown in FIG. 4.

The transceiver module 601 is configured to receive a fourth message. The fourth message includes user plane integrity protection indication information and an integrity protection algorithm identifier of a first network standard, and the user plane integrity protection indication information indicates to enable user plane integrity protection for a first data radio bearer DRB.

When the fourth message is from the access network device of the first network standard, and the user plane integrity protection indication information indicates to enable the user plane integrity protection for the first DRB, the processing module 602 is configured to activate the user plane integrity protection for the first DRB based on a first key and an integrity protection algorithm of the first network standard.

It should be noted that all related content of steps in the foregoing method embodiments may be cited in function description of corresponding functional modules. Details are not described herein again.

Optionally, the communication apparatus 600 may further include a storage module (not shown in FIG. 6). The storage module stores a program or instructions. When the processing module 602 executes the program or the instructions, the communication apparatus 600 is enabled to perform a function of the terminal device in the communication method shown in FIG. 4.

It should be noted that the communication apparatus 600 may be the terminal device, or may be a chip (system) or another component or assembly that may be disposed in the terminal device. This is not limited in this application.

In addition, for technical effects of the communication apparatus 600, refer to the technical effects of the communication method shown in FIG. 4. Details are not described herein again.

An embodiment of this application provides a communication system. The communication system includes an access network device of a first network standard and a terminal device. Optionally, the communication system may further include a core network element of the first network standard.

The access network device of the first network standard is configured to perform actions performed by the access network device of the first network standard in the foregoing method embodiment. For a specific execution method and process, refer to the foregoing method embodiment. Details are not described herein again.

The terminal device is configured to perform actions performed by the terminal device in the foregoing method embodiment. For a specific execution method and process, refer to the foregoing method embodiment. Details are not described herein again.

The core network element of the first network standard is configured to perform actions performed by the core network element of the first network standard in the foregoing method embodiment. For a specific execution method and process, refer to the foregoing method embodiment. Details are not described herein again.

An embodiment of this application provides a chip system. The chip system includes a logic circuit and an input/output port. The logic circuit may be configured to implement a processing function related to the communication method provided in embodiments of this application, and the input/output port may be configured to perform a transceiver function related to the communication method provided in embodiments of this application.

For example, the input port may be configured to implement a receiving function related to the communication method provided in embodiments of this application, and the output port may be configured to implement a sending function related to the communication method provided in embodiments of this application.

For example, a processor in a communication apparatus 500 may be configured to perform, for example, but not limited to, baseband related processing, and a transceiver in the communication apparatus 500 may be configured to perform, for example, but not limited to, radio frequency transceiving. The foregoing devices may be separately disposed on chips that are independent of each other, or at least some or all of the devices may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more devices may be integrated on a same chip. For example, the digital baseband processor may be integrated on a same chip with a plurality of application processors (for example, but not limited to a graphics processor and a multimedia processor). The chip may be referred to as a system on chip (system on chip). Whether the devices are independently disposed on different chips or are integrated and disposed on one or more chips usually depends on a specific requirement of a product design. A specific implementation of the devices is not limited in this embodiment of this application.

In a possible design, the chip system further includes a memory. The memory is configured to store program instructions and data for implementing a function related to the communication method provided in embodiments of this application.

The chip system may include a chip, or may include a chip and another discrete device.

An embodiment of this application provides a computer-readable storage medium. The computer-readable storage medium includes a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that, the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement the embodiments, all or some of the foregoing embodiments may be implemented in a form of a computer program product. The computer program product includes one or more computer instructions or computer programs. When the program instructions or the computer programs are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The software product is stored in a storage medium, and includes several instructions for instructing a computer device (which may be a personal computer, a server, or a network device) to perform all or some of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
when a first condition is met, obtaining, by an access network device of a first network standard, user plane integrity protection indication information and an integrity protection algorithm identifier of a second network standard, wherein the first condition comprises: determining to establish a first data radio bearer DRB between the access network device of the first network standard and a terminal device, and determining to enable user plane integrity protection for the first DRB; and the user plane integrity protection indication information indicates to enable the user plane integrity protection for the first DRB;
sending, by the access network device of the first network standard, a first message to the terminal device, wherein the first message comprises the user plane integrity protection indication information and the integrity protection algorithm identifier of the second network standard; and
activating, by the access network device of the first network standard, the user plane integrity protection for the first DRB based on a first key and the integrity protection algorithm of the second network standard.

2. The communication method according to claim 1, wherein the first message further comprises first indication information, and the first indication information indicates to determine the first key by using a master key.

3. The communication method according to claim 2, wherein the first key is determined based on the master key, the integrity protection algorithm identifier of the second network standard, and a first algorithm type distinguisher.

4. The communication method according to claim 3, wherein a value of the first algorithm type distinguisher is 0x07.

5. The communication method according to any one of claims 1 to 4, wherein the integrity protection algorithm identifier of the second network standard is determined based on a security capability that is of the second network standard and that is of the terminal device.

6. The communication method according to claim 5, wherein the method further comprises:
receiving, by the access network device of the first network standard, a second message from a core network element of the first network standard, wherein the second message comprises the security capability that is of the second network standard and that is of the terminal device.

7. The communication method according to any one of claims 1 to 4, wherein the integrity protection algorithm identifier of the second network standard is determined based on a security capability of the first network standard.

8. The communication method according to claim 7, wherein the method further comprises:
when the terminal device supports the user plane integrity protection, determining, by the access network device of the first network standard, the integrity protection algorithm identifier of the second network standard based on the security capability of the first network standard.

9. The communication method according to claim 7 or 8, wherein the security capability of the first network standard comprises an integrity protection algorithm identifier of the first network standard, and the integrity protection algorithm identifier of the second network standard is obtained by mapping the integrity protection algorithm identifier of the first network standard.

10. The communication method according to any one of claims 7 to 9, wherein the security capability of the first network standard is received by the access network device of the first network standard from a core network element of the first network standard.

11. The communication method according to any one of claims 1 to 10, wherein the activating, by the access network device of the first network standard, the user plane integrity protection for the first DRB based on a first key and the integrity protection algorithm of the second network standard comprises:
configuring, by the access network device of the first network standard, the first key and the integrity protection algorithm of the second network standard for a packet data convergence protocol PDCP entity that is of the second network standard and that corresponds to the first DRB.

12. The communication method according to any one of claims 1 to 11, wherein the first condition further comprises that the terminal device supports the user plane integrity protection.

13. The communication method according to claim 12, wherein the method further comprises:
receiving, by the access network device of the first network standard, user plane indication information from the terminal device or the core network element of the first network standard, wherein the user plane indication information indicates whether the terminal device supports the user plane integrity protection, and the first condition is determined based on the user plane indication information.

14. The communication method according to any one of claims 2 to 4, wherein the user plane integrity protection indication information, the integrity protection algorithm identifier of the second network standard, and the first indication information are encapsulated in a radio bearer configuration Radiobearerconfig information element of the first message.

15. The communication method according to any one of claims 1 to 14, wherein the first network standard comprises 4th generation 4G, long term evolution LTE, or evolved packet system EPS.

16. The communication method according to any one of claims 1 to 15, wherein the second network standard comprises 5th generation 5G, new radio NR, or 5th generation system 5GS.

17. A communication method, comprising:
receiving, by a terminal device, a first message, wherein the first message comprises user plane integrity protection indication information and an integrity protection algorithm identifier of a second network standard, and the user plane integrity protection indication information indicates to enable user plane integrity protection for a first data radio bearer DRB between an access network device of a first network standard and the terminal device; and
when the first message is from the access network device of the first network standard, and the user plane integrity protection indication information indicates to enable the user plane integrity protection for the first DRB, activating, by the terminal device, the user plane integrity protection for the first DRB based on a first key and the integrity protection algorithm of the second network standard.

18. The communication method according to claim 17, wherein the first message further comprises first indication information, the first indication information indicates to determine the first key by using a master key, and the method further comprises:
determining, by the terminal device, the first key based on the first indication information and by using the master key.

19. The communication method according to claim 18, wherein the first key is determined based on the master key, the integrity protection algorithm identifier of the second network standard, and a first algorithm type distinguisher.

20. The communication method according to claim 19, wherein a value of the first algorithm type distinguisher is 0x07.

21. The communication method according to any one of claims 17 to 20, wherein the method further comprises:
when the terminal device supports the user plane integrity protection, sending, by the terminal device, a third message to a core network element of the first network standard, wherein the third message comprises a security capability of the second network standard.

22. The communication method according to any one of claims 17 to 21, wherein the activating, by the terminal device, the user plane integrity protection for the first DRB based on a first key and the integrity protection algorithm of the second network standard comprises:
configuring, by the terminal device, the first key and the integrity protection algorithm of the second network standard for a packet data convergence protocol PDCP entity that is of the second network standard and that corresponds to the first DRB.

23. The communication method according to any one of claims 17 to 22, wherein the method further comprises:
determining, by the terminal device based on a public land mobile network identifier PLMN ID, whether the first message is from the access network device of the first network standard, wherein the PLMN ID is from the access network device that sends the first message.

24. The communication method according to any one of claims 17 to 23, wherein the method further comprises:
sending, by the terminal device, user plane indication information to the access network device of the first network standard or the core network element of the first network standard, wherein the user plane indication information indicates whether the terminal device supports the user plane integrity protection.

25. The communication method according to any one of claims 18 to 20, wherein the user plane integrity protection indication information, the integrity protection algorithm identifier of the second network standard, and the first indication information are encapsulated in a radio bearer configuration Radiobearerconfig information element of the first message.

26. The communication method according to any one of claims 17 to 25, wherein the first network standard comprises 4th generation 4G, long term evolution LTE, or evolved packet system EPS.

27. The communication method according to any one of claims 17 to 26, wherein the second network standard comprises 5th generation 5G, new radio NR, or 5th generation system 5GS.

28. A communication apparatus, wherein the communication apparatus comprises a unit or a module configured to perform the method according to any one of claims 1 to 16.

29. A communication apparatus, wherein the communication apparatus comprises a unit or a module configured to perform the method according to any one of claims 17 to 27.

30. A communication apparatus, wherein the communication apparatus comprises a processor, and the processor is configured to perform the communication method according to any one of claims 1 to 27.

31. A computer-readable storage medium, wherein the computer-readable storage medium comprises a computer program or instructions, and when the computer program or the instructions are run on a computer, the communication method according to any one of claims 1 to 27 is performed.

32. A computer program product, wherein the computer program product comprises a computer program or instructions, and when the computer program or the instructions are run on a computer, the communication method according to any one of claims 1 to 27 is performed.
